# EUROPEAN PATENT APPLICATION

(11) **EP 4 697 788 A1**
(43) Date of publication of application: **18.02.2026**
(21) Application number: 24795855.6
(22) Date of filing: 11.04.2024
(51) Int. Cl.: H04W 24/08, G01S 13/76

(54) **COMMUNICATION METHOD AND COMMUNICATION DEVICE**

(30) Priority: 25.04.2023 CN 202310475308
(71) Applicant: Huawei Technologies Co., Ltd., Shenzhen, Guangdong 518129 (CN)
(72) Inventor: HUANG, Lei, Shenzhen, Guangdong 518129 (CN); CHITRAKAR, Rojan, Shenzhen, Guangdong 518129 (CN); WU, Kuan, Shenzhen, Guangdong 518129 (CN); LI, Yunbo, Shenzhen, Guangdong 518129 (CN); YANG, Xun, Shenzhen, Guangdong 518129 (CN)
(74) Representative: Maiwald GmbH
(86) International application number: PCT/CN2024/087259
(87) International publication number: WO 2024/222474

(57) **Abstract**

This application relates to a communication method and a communication apparatus, and may be applied to a UWB-based wireless personal area network system. The communication apparatus supports the 802.15 series protocols and the 802.11 series protocols. The communication method includes: sending a first poll frame, where the first poll frame is for triggering ranging measurement in a first range-measurement cycle, the first poll frame further indicates a first parameter set that takes effect in the first range-measurement cycle, and the first parameter set includes one or more of the following parameters: a first narrowband physical layer PHY parameter, a first narrowband channel allow list, a first ranging block structure parameter, or a first ultra-wideband UWB multi-millisecond MMS ranging configuration parameter; and receiving a response frame of the first poll frame. According to this application, an initiator uses a poll frame to indicate a parameter set that takes effect in a current range-measurement cycle. Compared with a conventional manner of setting a ranging session configuration parameter that takes effect in a plurality of range-measurement cycles, this application helps set a ranging session configuration parameter more applicable to the current range-measurement cycle.

## Description

This application claims priority to Chinese Patent Application No. 202310475308.0, filed with the China National Intellectual Property Administration on April 25, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A narrowband assisted ultra-wideband multi-millisecond (narrowband assisted Ultra-wideband multi-millisecond, NBA-UWB MMS) ranging session is configured based on a set of physical layer (physical, PHY) parameters and medium access control (medium access control, MAC) parameters. A set of PHY parameters includes a narrowband PHY parameter for a ranging control phase and a measurement report phase, a ranging configuration parameter for a ranging phase, and the like of a narrowband (narrowband, NB) channel and an ultra-wideband (ultra-wideband, UWB) channel. The MAC parameters include configuration parameters of a ranging slot, a ranging round, and a ranging block for the ranging control phase, the ranging phase, and the measurement report phase.

Before the NBA-UWB MMS ranging session is started, an initiator and a responder may engage in an NBA-UWB MMS initialization and setup (NBA-UWB MMS initialization and setup) phase in-band to negotiate a configuration related to the ranging session. Alternatively, the initiator and the responder may set a configuration related to the ranging session via out-of-band radio or an upper layer.

When the ranging session includes a plurality of measurement cycles, the configuration related to the ranging session that is set in the foregoing manner is used as a long-term operating parameter, and is applied to the plurality of measurement cycles included in the ranging session. However, if a channel condition between the initiator and the responder changes, measurement performance may be reduced when the long-term operating parameter is used for measurement in one or more of the plurality of measurement cycles.

### SUMMARY

Embodiments of this application provide a communication method, to set a measurement configuration applicable to a single measurement cycle.

According to a first aspect, a communication method is provided. The method may be performed by an initiator device, or may be performed by a component (for example, a chip or a circuit) of the initiator device. This is not limited.

The method includes: sending a first poll frame, where the first poll frame is for triggering ranging measurement in a first range-measurement cycle, the first poll frame further indicates a first parameter set that takes effect in the first range-measurement cycle, and the first parameter set includes one or more of the following parameters: a first narrowband physical layer (physical, PHY) parameter, a first narrowband channel allow list, a first ranging block structure parameter, or a first ultra-wideband (ultra-wideband, UWB) multi-millisecond (multi-millisecond, MMS) ranging configuration parameter; and receiving a response frame of the first poll frame.

For example, the first narrowband PHY parameter indicates a transmission rate of a payload of a narrowband physical protocol data unit (physical protocol data unit, PPDU) transmitted in a first ranging control phase and/or a first measurement report phase included in the first range-measurement cycle. Optionally, the first narrowband PHY parameter further indicates a configuration parameter of a narrowband PPDU transmitted in the first ranging control phase and/or the first measurement report phase. The configuration parameter of the narrowband PPDU may include one or more of the following: a preamble length, a start-of-frame delimiter (start-of-frame delimiter, SFD) length, a physical header (physical header, PHR) length, a spreading factor used in a preamble and an SFD, a spreading factor used in the PHR and the payload of the narrowband PPDU, or a coding scheme used in the PHR and the payload.

The first ranging block structure parameter may include one or more of the following: ranging round duration, ranging block duration, a ranging block index, a ranging round index, or a hopping mode.

The first UWB MMS ranging configuration parameter may include one or more of the following: a ranging sequence fragment (ranging sequence fragment, RSF) fragment number, a ranging integrity fragment (ranging integrity fragment, RIF) fragment number, a multi-millisecond ranging sequence (multi-millisecond ranging sequence, MMRS) code index, an MMRS gap size, an RIF fragment length, or a number of MMRS sequence repetitions.

Based on the technical solution, the initiator device may indicate, based on the first poll frame, the first parameter set that takes effect in the first range-measurement cycle. Compared with a conventional manner of setting a ranging session configuration parameter that takes effect in a plurality of range-measurement cycles, the technical solution helps set a ranging session configuration parameter more applicable to the first range-measurement cycle. For example, the initiator device may determine the first parameter set based on a channel condition. If a channel condition between the initiator device and a responder device is good, the initiator device may determine a more efficient first parameter set, thereby reducing occupied air interface time, improving ranging efficiency, and reducing interference to another network. Alternatively, if a channel condition between the initiator device and a responder device is poor, the initiator device may determine a first parameter set applicable to the poor channel condition, to ensure ranging measurement performance.

With reference to the first aspect, in some implementations of the first aspect, the response frame indicates a second parameter set that is suggested for taking effect in a second range-measurement cycle, the second range-measurement cycle is after the first range-measurement cycle, and the second parameter set includes one or more of the following parameters: a second narrowband PHY parameter or a second UWB MMS ranging configuration parameter.

For more descriptions of the second parameter set, refer to the description of the first parameter set.

With reference to the first aspect, in some implementations of the first aspect, the method further includes: receiving a first report frame, where the first report frame includes a ranging measurement report corresponding to the first range-measurement cycle, the first report frame further indicates a third parameter set that is suggested for taking effect in the second range-measurement cycle, the second range-measurement cycle is after the first range-measurement cycle, and the third parameter set includes one or more of the following parameters: a third narrowband PHY parameter or a third UWB MMS ranging configuration parameter.

For more descriptions of the second parameter set, refer to the description of the first parameter set.

It should be understood that if the response frame indicates the second parameter set, and the first report frame indicates the third parameter set, the initiator device may determine, based on the third parameter set, a parameter that takes effect in the second range-measurement cycle. Compared with the response frame, the first report frame is a frame closer to the second range-measurement cycle. Therefore, compared with the second parameter set, the third parameter set suggested by the responder device based on the first report frame may be more applicable to the second range-measurement cycle. In other words, using the third parameter set is more conducive to improving ranging performance in the second range-measurement cycle. Therefore, when the initiator device determines, based on the third parameter set, the parameter that takes effect in the second range-measurement cycle, the initiator device can determine a parameter that is more applicable to the second range-measurement cycle. For example, if the responder device determines the third parameter set based on a channel condition, because the first report frame is closer to the second measurement measurement cycle, the channel condition based on which the responder device determines the third parameter set is closer to a channel condition of the second range-measurement cycle. Therefore, the third parameter set may be more applicable to the second range-measurement cycle.

With reference to the first aspect, in some implementations of the first aspect, the first poll frame is further for requesting a parameter set that is suggested for taking effect in the second range-measurement cycle.

With reference to the first aspect, in some implementations of the first aspect, the first parameter set includes the first ranging block structure parameter and/or the first UWB MMS ranging configuration parameter, and the method further includes: performing the ranging measurement in the first range-measurement cycle based on the first ranging block structure parameter and/or the first UWB MMS ranging configuration parameter.

With reference to the first aspect, in some implementations of the first aspect, the first parameter set includes the first narrowband PHY parameter, and the method further includes: sending a second report frame based on the first narrowband PHY parameter, where the second report frame includes the ranging measurement report corresponding to the first range-measurement cycle.

With reference to the first aspect, in some implementations of the first aspect, the first parameter set includes the first narrowband channel allow list, and the method further includes: sending the second report frame on a first narrowband channel included in the first narrowband channel allow list, where the second report frame includes the ranging measurement report corresponding to the first range-measurement cycle.

Based on the technical solution, the initiator device can be prevented from sending the second report frame on an unavailable narrowband channel. For example, if the initiator device determines the first narrowband channel allow list based on a channel condition, a narrowband channel included in the first narrowband channel allow list may be an idle narrowband channel, so that the initiator device sends the second report frame on the first narrowband channel to avoid a sending failure.

With reference to the first aspect, in some implementations of the first aspect, the second report frame further indicates a fourth parameter set that takes effect in the second range-measurement cycle, the second range-measurement cycle is after the first range-measurement cycle, and the fourth parameter set includes one or more of the following parameters: a fourth narrowband PHY parameter, a second narrowband channel allow list, a second ranging block structure parameter, or a fourth UWB MMS ranging configuration parameter.

For more descriptions of the fourth parameter set, refer to the description of the first parameter set.

With reference to the first aspect, in some implementations of the first aspect, the fourth parameter set includes the fourth narrowband PHY parameter, and the method further includes: sending a second poll frame based on the fourth narrowband PHY parameter, where the second poll frame is for triggering ranging measurement in the second range-measurement cycle.

Based on the technical solution, the initiator device sends the second poll frame based on the fourth narrowband PHY parameter. This helps improve transmission performance of the second poll frame. The fourth narrowband PHY parameter may be determined based on a channel condition. Therefore, the fourth narrowband PHY parameter better meets the channel condition between the initiator device and the responder device, so that sending the second poll frame based on a fourth narrowband PHY rate helps improve transmission efficiency of the second poll frame.

It should be understood that, even if the response frame indicates the second narrowband PHY parameter, and/or the first report frame indicates the third narrowband PHY parameter, and the second report frame indicates the fourth narrowband PHY parameter, the initiator device still sends the second poll frame based on the fourth narrowband PHY rate. Compared with the response frame and the first report frame, the second report frame is the frame closer to the second range-measurement cycle. Therefore, compared with the second narrowband PHY parameter and/or the third narrowband PHY parameter, the fourth narrowband PHY parameter indicated by the second report frame may be more applicable to transmitting the second poll frame. In other words, transmitting the second poll frame based on the fourth narrowband PHY parameter helps obtain higher transmission efficiency. For example, if the initiator device determines the fourth narrowband PHY parameter based on the channel condition, because the second report frame is closer to the second measurement measurement cycle, the channel condition based on which the initiator device determines the fourth narrowband PHY parameter is closer to the channel condition of the second range-measurement cycle. Therefore, the fourth narrowband PHY parameter may be more applicable to transmitting the second poll frame.

With reference to the first aspect, in some implementations of the first aspect, the method further includes: receiving an acknowledgment (acknowledgment, ACK) frame of the second report frame.

With reference to the first aspect, in some implementations of the first aspect, the first parameter set includes the first narrowband PHY parameter, and the method further includes: sending a second poll frame based on the first narrowband PHY parameter, where the second poll frame is for triggering ranging measurement in a second range-measurement cycle, and the second range-measurement cycle is after the first range-measurement cycle.

Optionally, if the response frame does not indicate the second narrowband PHY parameter, and the first range-measurement cycle does not include the measurement report phase, the initiator device sends the second poll frame based on the first narrowband PHY parameter. Alternatively, if the response frame does not indicate the second narrowband PHY parameter, the first report frame does not indicate the third narrowband PHY parameter, and the second report frame does not indicate the fourth narrowband PHY parameter, the initiator device sends the second poll frame based on the first narrowband PHY parameter.

With reference to the first aspect, in some implementations of the first aspect, the second parameter set includes the second narrowband PHY parameter, and the method further includes: sending a second poll frame based on the second narrowband PHY parameter, where the second poll frame is for triggering ranging measurement in the second range-measurement cycle, and the second range-measurement cycle is after the first range-measurement cycle.

Optionally, if the first range-measurement cycle does not include the measurement report phase, the initiator device sends the second poll frame according to the second narrowband PHY parameter. Alternatively, if the first report frame does not indicate the third narrowband PHY parameter, and the second report frame does not indicate the fourth narrowband PHY parameter, the initiator device sends the second poll frame based on the second narrowband PHY parameter.

With reference to the first aspect, in some implementations of the first aspect, the method further includes: sending an ACK frame of the response frame.

With reference to the first aspect, in some implementations of the first aspect, the second poll frame further indicates a fifth parameter set that takes effect in the second range-measurement cycle, the fifth parameter set is determined based on the second parameter set, and the fifth parameter set includes one or more of the following parameters: a fifth narrowband PHY parameter, a third narrowband channel allow list, a third ranging block structure parameter, or a fifth UWB MMS ranging configuration parameter.

For more descriptions of the fifth parameter set, refer to the description of the first parameter set.

With reference to the first aspect, in some implementations of the first aspect, the third parameter set includes the third narrowband PHY parameter, and the method further includes: sending a second poll frame based on the third narrowband PHY parameter, where the second poll frame is for triggering ranging measurement in the second range-measurement cycle, and the second range-measurement cycle is after the first range-measurement cycle.

Optionally, if the second report frame does not indicate the fourth narrowband PHY parameter, the initiator device sends the second poll frame based on the third narrowband PHY parameter.

It should be understood that, even if the response frame indicates the second narrowband PHY parameter, and the first report frame indicates the third narrowband PHY parameter, the initiator device still sends the second poll frame based on a third narrowband PHY rate. Compared with the response frame, the first report frame is a frame closer to the second range-measurement cycle. Therefore, compared with the second narrowband PHY parameter, the third narrowband PHY parameter indicated by the first report frame may be more applicable to transmitting the second poll frame. In other words, transmitting the second poll frame based on the fourth narrowband PHY parameter helps obtain higher transmission efficiency. For example, if the responder device determines the third narrowband PHY parameter based on the channel condition, because the first report frame is closer to the second measurement measurement cycle, the channel condition based on which the responder device determines the third narrowband PHY parameter is closer to the channel condition of the second range-measurement cycle. Therefore, the third narrowband PHY parameter may be more applicable to transmitting the second poll frame.

With reference to the first aspect, in some implementations of the first aspect, the method further includes: sending an ACK frame of the first report frame.

According to a second aspect, a communication method is provided. The method may be performed by a responder device, or may be performed by a component (for example, a chip or a circuit) of the responder device. This is not limited.

The method includes: receiving a first poll frame, where the first poll frame is for triggering ranging measurement in a first range-measurement cycle, the first poll frame further indicates a first parameter set that takes effect in the first range-measurement cycle, and the first parameter set includes one or more of the following parameters: a first narrowband PHY parameter, a first narrowband channel allow list, a first ranging block structure parameter, or a first UWB MMS ranging configuration parameter; and sending a response frame of the first poll frame.

Based on the technical solution, the initiator device may indicate, based on the first poll frame, the first parameter set that takes effect in the first range-measurement cycle. Compared with a conventional manner of setting a ranging session configuration parameter that takes effect in a plurality of range-measurement cycles, the technical solution helps set a ranging session configuration parameter more applicable to the first range-measurement cycle. For example, the initiator device may determine the first parameter set based on a channel condition. If a channel condition between the initiator device and a responder device is good, the initiator device may determine a more efficient first parameter set, thereby reducing occupied air interface time, improving ranging efficiency, and reducing interference to another network. Alternatively, if a channel condition between the initiator device and a responder device is poor, the initiator device may determine a first parameter set applicable to the poor channel condition, to ensure ranging measurement performance.

With reference to the second aspect, in some implementations of the second aspect, the first parameter set includes the first narrowband PHY parameter, and the sending a response frame of the first poll frame includes: sending the response frame based on the first narrowband PHY parameter.

With reference to the second aspect, in some implementations of the second aspect, the first parameter set includes the first narrowband channel allow list, and the sending a response frame of the first poll frame includes: sending the response frame on a second narrowband channel included in the first narrowband channel allow list.

Based on the technical solution, the responder device can be prevented from sending the response frame on an unavailable narrowband channel. For example, if the initiator device determines the first narrowband channel allow list based on a channel condition, a narrowband channel included in the first narrowband channel allow list may be an idle narrowband channel, so that the responder device sends the response frame on the second narrowband channel to avoid a sending failure.

With reference to the second aspect, in some implementations of the second aspect, the response frame indicates a second parameter set that is suggested for taking effect in a second range-measurement cycle, the second range-measurement cycle is after the first range-measurement cycle, and the second parameter set includes one or more of the following parameters: a second narrowband PHY parameter or a second UWB MMS ranging configuration parameter.

With reference to the second aspect, in some implementations of the second aspect, the method further includes: sending a first report frame, where the first report frame includes a ranging measurement report corresponding to the first range-measurement cycle, the first report frame further indicates a third parameter set that is suggested for taking effect in the second range-measurement cycle, the second range-measurement cycle is after the first range-measurement cycle, and the third parameter set includes one or more of the following parameters: a third narrowband PHY parameter or a third UWB MMS ranging configuration parameter.

With reference to the second aspect, in some implementations of the second aspect, the first parameter set includes the first narrowband PHY parameter, and the sending a first report frame includes: sending the first report frame based on the first narrowband PHY parameter.

With reference to the second aspect, in some implementations of the second aspect, the first parameter set includes the first narrowband channel allow list, and the sending a first report frame includes: sending the first report frame on a third narrowband channel included in the first narrowband channel allow list.

Based on the technical solution, the responder device can be prevented from sending the first report frame on an unavailable narrowband channel. For example, if the initiator device determines the first narrowband channel allow list based on a channel condition, a narrowband channel included in the first narrowband channel allow list may be an idle narrowband channel, so that the responder device sends the first report frame on the third narrowband channel to avoid a sending failure.

With reference to the second aspect, in some implementations of the second aspect, the first poll frame is further for requesting a parameter set that is suggested for taking effect in the second range-measurement cycle.

With reference to the second aspect, in some implementations of the second aspect, the first parameter set includes the first ranging block structure parameter and/or the first UWB MMS ranging configuration parameter, and the method further includes: performing the ranging measurement in the first range-measurement cycle based on the first ranging block structure parameter and/or the first UWB MMS ranging configuration parameter.

According to a third aspect, a communication apparatus is provided. The communication apparatus is configured to perform the method according to any one of the first aspect and the second aspect. Specifically, the communication apparatus may include units and/or modules configured to perform the method according to any one of the first aspect or the implementations of the first aspect, or include units and/or modules configured to perform the method according to any one of the second aspect or the implementations of the second aspect, for example, a processing unit and/or a transceiver unit.

In an implementation, the communication apparatus is a device (for example, an initiator device, or a responder device). When the communication apparatus is the device, the transceiver unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip, a chip system, or a circuit used in a device (for example, an initiator device, or a responder device). When the communication apparatus is the chip, the chip system, or the circuit used in the device, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method according to any one of the first aspect or the implementations of the first aspect, or perform the method according to any one of the second aspect or the implementations of the second aspect.

In an implementation, the communication apparatus is a device (for example, an initiator device, or a responder device).

In another implementation, the apparatus is a chip, a chip system, or a circuit used in a device (for example, an initiator device, or a responder device).

According to a fifth aspect, this application provides a processor, configured to perform the method according to the foregoing aspects.

Unless otherwise specified, or if operations such as sending, and obtaining/receiving related to the processor do not contradict an actual function or internal logic of the operations in related descriptions, the operations may be understood as operations such as outputting, receiving, and inputting of the processor, or operations such as sending and receiving performed by a radio frequency circuit and an antenna. This is not limited in this application.

According to a sixth aspect, a computer-readable storage medium is provided. The computer-readable storage medium stores program code to be executed by a device, and the program code includes instructions for performing the method according to any one of the first aspect or the implementations of the first aspect, or includes instructions for performing the method according to any one of the second aspect or the implementations of the second aspect.

According to a seventh aspect, a computer program product including instructions is provided. When the computer program product runs on a computer, the computer performs the method according to any one of the first aspect or the implementations of the first aspect, or the computer performs the method according to any one of the second aspect or the implementations of the second aspect.

According to an eighth aspect, a chip is provided. The chip includes a processor and an input/output interface. The processor reads, through the input/output interface, instructions stored in a memory, to perform the method according to any one of the first aspect or the implementations of the first aspect, or perform the method according to any one of the second aspect or the implementations of the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to any one of the first aspect or the implementations of the first aspect, or perform the method according to any one of the second aspect or the implementations of the second aspect.

According to a ninth aspect, a communication system is provided, including the foregoing initiator device and responder device.

### BRIEF DESCRIPTION OF DRAWINGS

FIG. 1 is a diagram of two application scenarios according to this application;
FIG. 2 is a diagram of a UWB signal according to an embodiment of this application;
FIG. 3 is a diagram of an architecture of a ranging/positioning system according to an embodiment of this application;
FIG. 4 is a diagram of phases of a UWB ranging round;
FIG. 5 is a diagram of an NBA-UWB MMS ranging method;
FIG. 6 is a schematic flowchart of a communication method according to an embodiment of this application;
FIG. 7(a) to FIG. 7(d) are a diagram of a frame structure of a poll frame according to an embodiment of this application;
FIG. 8 is a diagram of a frame structure of a response frame according to an embodiment of this application;
FIG. 9 is a diagram of a frame structure of a report frame according to an embodiment of this application;
FIG. 10 is a diagram of a frame structure of a report frame according to another embodiment of this application;
FIG. 11 is a diagram of a method according to an embodiment of this application;
FIG. 12(a) to FIG. 12(b) are a diagram of a method according to an embodiment of this application;
FIG. 13(a) to FIG. 13(b) are a diagram of a method according to an embodiment of this application;
FIG. 14(a) to FIG. 14(c) are a diagram of a method according to an embodiment of this application;
FIG. 15 is a diagram of a communication apparatus according to an embodiment of this application;
FIG. 16 is a diagram of another communication apparatus according to an embodiment of this application; and
FIG. 17 is a diagram of a chip system according to an embodiment of this application.

### DESCRIPTION OF EMBODIMENTS

The following describes technical solutions of embodiments in this application with reference to accompanying drawings.

Embodiments of this application may be applied to an ultra-wideband (Ultra-WideBand, UWB) technology-based wireless personal area network (wireless personal area network, WPAN). Currently, a standard for the WPAN is the Institute of Electrical and Electronics Engineers (Institute of Electrical and Electronics Engineers, IEEE) 802.15 series. The WPAN may be used for communication between digital auxiliary devices in a small range, for example, a telephone, a computer, and an auxiliary device, and an operating range of the WPAN is usually within 10 m. Technologies supporting the wireless personal area network include Bluetooth (Bluetooth), ZigBee (ZigBee), ultra-wideband, an IrDA infrared (infrared) connection technology, HomeRF, and the like. However, a person skilled in the art easily understands that, various aspects in this application may be extended to another network using various standards or protocols, for example, a wireless local area network (Wireless Local Area Network, WLAN), a high performance radio LAN (High Performance Radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. FFD devices can communicate with each other, and the FFD device and the RFD device can communicate with each other. RFD devices cannot directly communicate with each other, and can only communicate with the FFD device, or forward data externally via one FFD device. An FFD device associated with the RFD is referred to as a coordinator (coordinator) of the RFD. The RFD device is mainly for a simple control application, like a light switch and a passive infrared sensor, transmits a small amount of data, and occupies a small number of transmission resources and communication resources. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator having functions of member identity management, link information management, and packet forwarding. Optionally, the device in embodiments of this application may be a device that supports a plurality of WPAN standards, such as 802.15.4a, 802.15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

Alternatively, embodiments of this application are further applicable to a wireless local area network system, like an internet of things (internet of things, IoT) network or vehicle-to-everything (Vehicle to X, V2X). Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication system applicable to this application is only an example for description, and the communication system applicable to this application is not limited thereto. This is uniformly described herein, and details are not described below again.

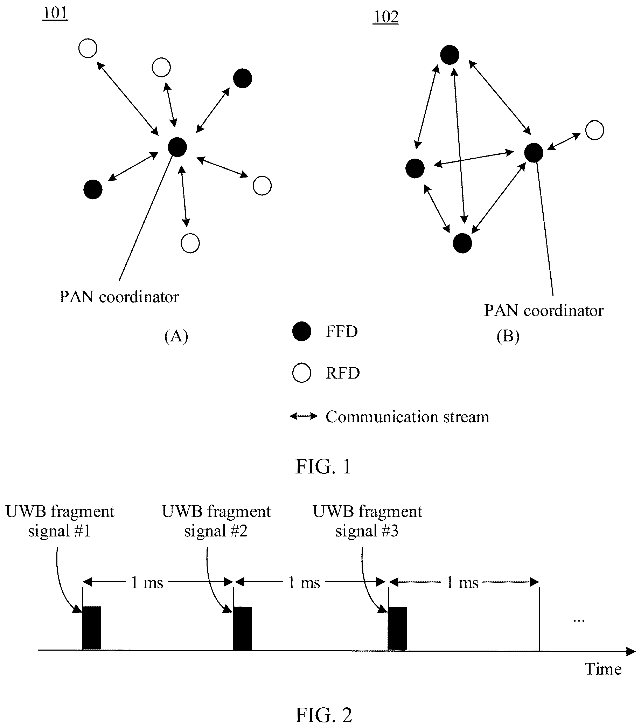

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices, that is, a one-to-many or many-to-one data transmission architecture may be established between a plurality of devices. In a system 102 shown in (B) in FIG. 1, a plurality of FFD devices and one RFD device form a communication system with a peer-to-peer topology (peer-to-peer topology), where one FFD is a PAN controller. In the communication system with the peer-to-peer topology, a many-to-many data transmission architecture may be established between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD and/or another RFD.

For ease of understanding of the technical solutions in embodiments of this application, some terms or concepts that may be used in embodiments of this application are first briefly described.
1. UWB technology: The UWB technology is a wireless communication/ranging/sensing technology that uses a nanosecond-level non-sinusoidal narrow impulse signal, and therefore occupies a wide spectral range. For its narrow impulse and extremely low radiation spectral density, a UWB system has advantages of a strong multipath resolution capability, low power consumption, high confidentiality, and the like, and is conducive to coexistence with another system, thereby improving spectral utilization and a system capacity.

As the Federal Communications Commission (Federal Communications Commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The IEEE has incorporated the UWB technology into its IEEE 802 series wireless standards, and has released a UWB technology-based WPAN standard IEEE 802.15.4a and an evolved version IEEE 802.15.4z thereof. Currently, a next-generation UWB technology-based WPAN standard 802.15.4ab has been put on the agenda.

Because the UWB technology performs data transmission through receiving and sending of nanosecond-level or sub-nanosecond-level and extremely narrow impulses rather than a carrier in a conventional communication system, the UWB technology has a high requirement on time synchronization of a transceiver device. In addition, due to large communication bandwidth of the UWB technology, the devices have high power consumption and complexity when a signal is received and sent on an ultra-wideband channel, and most UWB communication devices are driven by a battery. It is expected to further reduce power consumption of the UWB system in a next generation standard. Therefore, all signals except ranging and sensing reference signals are received and sent in a narrowband system in a narrowband signal-assisted manner. This reduces overall power consumption overheads.

2. Power of a UWB signal: Due to large bandwidth of an ultra-wideband system, during operating, to reduce interference to another narrowband device, an FCC imposes strict restrictions on power spectral density of UWB signals. According to the Code of Federal Regulations (Code of Federal Regulations, CFR), there are the following two rules.

Rule 1: An average value of maximum power spectral density (Power Spectral Density, PSD) of transmitted UWB signals within one millisecond cannot be greater than 41.3 dBm per megahertz.

Rule 2: Maximum power of the transmitted UWB signal in any 50 MHz bandwidth cannot exceed 1 milliwatt.

Rule 1 limits total energy transmitted by a UWB in one millisecond (for example, 37 nJ in a case of a 500 MHz bandwidth). The energy is transmitted in shorter time. This increases instantaneous power of a transmit signal, enlarges signal coverage, and increases a signal-to-noise ratio of a signal received at a receive end. Based on this, in some scenarios in which transmit power needs to be increased, a transmit end divides a to-be-transmitted UWB signal into a plurality of fragment signals, where a time length of each fragment signal is less than 1 millisecond, and then sends only one fragment signal in each millisecond.

For ease of understanding, a UWB signal is briefly described with reference to FIG. 2.

FIG. 2 is a diagram of a UWB signal according to an embodiment of this application. It can be seen from FIG. 2 that a transmit end divides the to-be-transmitted UWB signal into a plurality of fragment signals (for example, a UWB fragment signal #1, a UWB fragment signal #2, and a UWB fragment signal #3 shown in FIG. 2). A time length of each fragment signal is less than 1 millisecond, and one of the fragment signals is sent in each millisecond. A signal type of a fragment signal is also a UWB signal.

In addition, the "fragment signal" in this application may also be referred to as a "block signal", a "short signal", a "partial signal", a "fragment", a "block", or the like. A name of the fragment signal is not limited, and can identify that a UWB signal is divided into a plurality of UWB signals. A time length of each of the plurality of UWB signals obtained after division is less than 1 millisecond, and one UWB signal obtained after division is sent in each millisecond. Optionally, the plurality of fragment signals obtained by dividing the UWB signal may be the same. For example, the plurality of fragment signals obtained by dividing the UWB signal are preambles (preambles) with a same configuration. The preambles with the same configuration include but are not limited to a preamble length, a sequence used in the preambles, and the like.

It can be learned from the foregoing that, the to-be-transmitted UWB signal is divided into the plurality of fragment signals for fragment transmission. This can increase instantaneous power of the UWB signal, but cannot increase the instantaneous power infinitely. Rule 2 actually limits a power increase multiple for UWB-based fragment transmission.

For example, in this application, UWB-based fragment transmission may also be referred to as multi-millisecond (multi-millisecond, MMS) transmission.

3. Ranging or sensing: In a ranging or sensing scenario, precision of a measurement or sensing result is related to a signal bandwidth. A larger signal bandwidth indicates higher precision of a result obtained through sensing or ranging. Therefore, it may be considered that a reference signal for ranging or sensing is received and sent by using a UWB system, and another reference signal and/or data are/is transmitted according to a narrowband (narrowband) protocol. This can ensure ranging and sensing precision, and also reduce power consumption. Sensing in this application may be understood as a bottom-layer sensing technology in an internet of things technology architecture, and is a primary step for obtaining information and implementing object control in an internet of things. Ranging may be understood as measurement of a distance between devices, including but not limited to measurement of a distance between two objects in the internet of things.

For example, in this application, a UWB technical solution combining narrowband assisted UWB and multi-millisecond transmission may also be referred to as narrowband assisted ultra-wideband multi-millisecond (narrowband assisted Ultra-wideband multi-millisecond, NBA-UWB MMS).

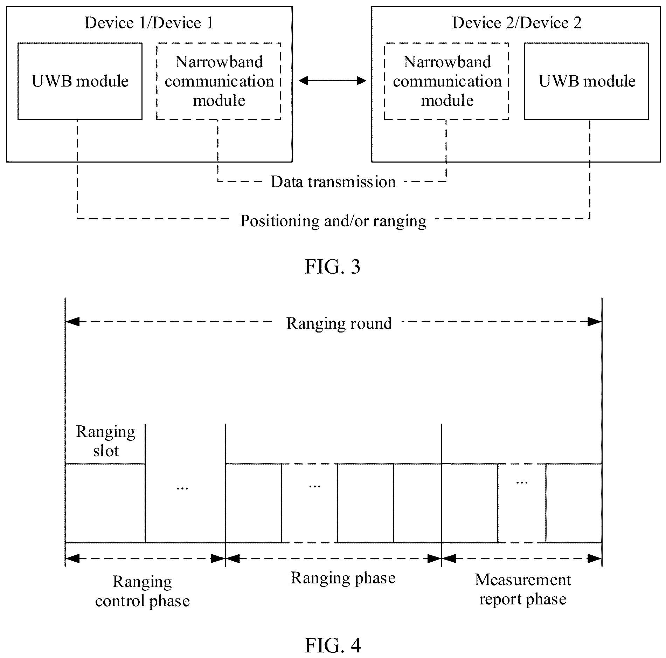

For ease of understanding, a ranging/positioning system to which the foregoing ranging technology is applied is briefly described with reference to FIG. 3.

FIG. 3 is a diagram of an architecture of a ranging/positioning system according to an embodiment of this application. As shown in FIG. 3, the ranging/positioning system includes a plurality of devices (a device 1 and a device 2 shown in FIG. 3), and may be an apparatus in embodiments of this application. Each device includes at least a UWB module, and further, the device may further include a narrowband communication module. Any one of ranging, positioning, and communication may be performed between the UWB modules of the device 1 and the device 2. If the device includes the narrowband communication module, data transmission may be performed between the narrowband communication modules of the device 1 and the device 2 through a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (like Wi-Fi, Bluetooth, or ZigBee). In one device (device), a UWB module and a narrowband communication module may be different apparatuses or chips. Certainly, the UWB module and the narrowband communication module may alternatively be integrated into one apparatus or chip. Embodiments of this application do not limit implementations of the UWB module and the narrowband communication module in the device. The UWB technology can enable a communication apparatus to have a high data throughput and enable apparatus positioning to have high precision.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, or any other appropriate device configured to perform network communication via a wireless medium. In addition, the device may support the 802.15.4ab standard or a next-generation standard of 802.15.4ab. The device further supports a plurality of standards, such as 802.15.4a, 802.15.4-2011, 802.15.4-2015, and 802.15.4z. The device may further support a plurality of wireless local area network (wireless local area network, WLAN) standards of the 802.11 family, for example, the 802.11ax, 802.11ac, 802.11n, 802.11g, 802.11b, 802.11a, and a next generation of the 802.11be.

4. Ranging round (ranging round): In a previous-generation IEEE 802.15.4z standard, a single ranging process is defined as a ranging round. A minimum processing time unit in each ranging round is a ranging slot (ranging slot). A ranging round is divided into three phases: a ranging control phase (ranging control phase), a ranging phase (ranging phase), and a measurement report phase (measurement report phase).

FIG. 4 is a diagram of phases of a UWB ranging round. It can be seen from FIG. 4 that, in IEEE 802.15.4z, the ranging control phase includes one ranging slot, while in the IEEE 802.15.4ab standard currently under discussion, the ranging control phase may include more than one ranging slot.

It should be noted that FIG. 4 is described by using an example in which the ranging round includes a ranging control phase, a ranging phase, and a measurement report phase. In some possible implementations, the ranging round may not include the measurement report phase. For example, if the measurement report phase is supported out-of-band, the ranging round may not include the measurement report phase. In addition, if the measurement report phase includes only one measurement report slot, an initiator or a responder should transmit a measurement report (REPORT) message in the measurement report slot. Whether the initiator or responder sends the measurement report message is configured based on a report mode. If the measurement report phase contains two measurement report slots, the responder should send the measurement report message in a first measurement report slot, and the initiator should send the measurement report message in a second measurement report slot. The report mode is determined by the initiator and the responder through negotiation in the initialization and setup phase before the ranging session, is set by an upper layer, or is default.

It should be noted that the communication method provided in this application may be applied to narrowband protocol assisted UWB ranging, and narrowband protocol assisted UWB sensing or another narrowband protocol assisted measurement procedure. Therefore, the ranging control phase shown in FIG. 4 in this application may be understood as one of corresponding measurement control phases in any type of measurement procedure, that is, the ranging phase may be understood as one of measurement phases. For example, the communication method provided in this application is applied to a narrowband protocol assisted UWB sensing procedure. The measurement control phase may be understood as a sensing control phase, the ranging phase may be understood as a sensing phase, and the ranging result report phase may be understood as a sensing result report phase.

In addition, it should be further noted that names of different phases of the foregoing single measurement round are merely examples, and do not constitute any limitation on the protection scope of this application. For example, the measurement control phase may be understood as a phase for configuring a parameter required in a measurement round; for another example, the measurement phase may be understood as a phase for measurement; for still another example, the measurement result report phase may be understood as a phase for reporting a measurement result, and may also be referred to as an end of the measurement phase.

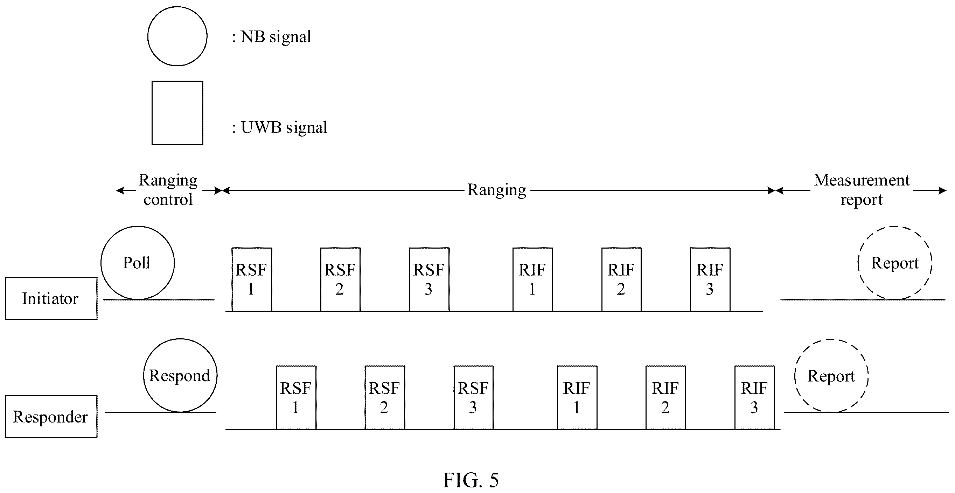

For ease of understanding, the following briefly describes a narrowband protocol assisted UWB MMS ranging method with reference to FIG. 5.

FIG. 5 is a diagram of an NBA-UWB MMS ranging method. In FIG. 5, an initiator (initiator) and a responder (responder) are included. By way of example, and not limitation, the initiator may be a device (for example, the FFD or the RFD shown in FIG. 1) having a communication capability in a WPAN. Similarly, the responder may also be a device (for example, the FFD or the RFD shown in FIG. 1) having a communication capability in the WPAN. In addition, a structure of the initiator and a structure of the responder may be a structure of the device 1 or the device 2 shown in FIG. 3. For example, the initiator and the responder each include a UWB module and a narrowband communication module.

It can be seen from FIG. 5 that, in a ranging control phase and a measurement report phase, signaling and/or data may be exchanged between the initiator (initiator) and the responder (responder) based on an NB signal; and in a ranging phase, ranging is performed by exchanging a UWB fragment signal between the initiator and the responder. As shown in FIG. 5, the initiator and the responder transmit a multi-millisecond ranging sequence (multi-millisecond ranging sequence, MMRS) (or referred to as a UWB fragment signal) in multiple 1-millisecond ranging sequence fragments (ranging sequence fragments, RSFs) (an RSF 1 to an RSF 3 shown in FIG. 5), and then transmit an encrypted timestamp sequence (scrambled timestamp sequence, STS) in multiple 1-millisecond ranging integrity fragments (ranging integrity fragments, RIFs) (an RIF 1 to an RIF 3 shown in FIG. 5), thereby effectively extending a secure ranging range.

An NBA-UWB MMS ranging session is configured based on a set of physical layer (physical, PHY) parameters and medium access control (medium access control, MAC) parameters. A set of PHY parameters includes a narrowband PHY parameter for a ranging control phase and a measurement report phase, a UWB MMS ranging configuration parameter for a ranging phase, and the like of a narrowband channel and a UWB channel. The MAC parameters include configuration parameters of a ranging slot, a ranging round, and a ranging block for the ranging control phase, the ranging phase, and the measurement report phase.

Before the NBA-UWB MMS ranging session is started, an initiator and a responder may engage in an NBA-UWB MMS initialization and setup (NBA-UWB MMS initialization and setup) phase in-band to negotiate a configuration related to the ranging session. Alternatively, the initiator and the responder may set a configuration related to the ranging session via out-of-band radio.

When the ranging session includes a plurality of measurement cycles, the configuration related to the ranging session that is set in the foregoing manner is used as a long-term operating parameter, and is applied to the plurality of measurement cycles included in the ranging session. However, if a channel condition between the initiator and the responder changes, measurement performance may be reduced when the long-term operating parameter is used for measurement in one or more of the plurality of measurement cycles.

In view of this, this application provides a communication method, to set a measurement configuration applicable to a single measurement cycle.

A specific structure of an execution body of the method provided in embodiments of this application is not specially limited in the following embodiments, provided that a program that records code of the method provided in embodiments of this application can be run to perform communication according to the method provided in embodiments of this application. For example, the method provided in embodiments of this application may be performed by a transceiver device, or a functional module that is in the transceiver device and that can invoke and execute a program.

For ease of understanding of embodiments of this application, the following descriptions are provided.

First, in this application, "indicate" may include "directly indicating" and "indirectly indicating". When a piece of information is described to indicate A, the information may directly indicate A or indirectly indicate A, but it does not indicate that the information definitely carries A.

Information indicated by the information is referred to as to-be-indicated information. In a specific implementation process, the to-be-indicated information may be indicated in a plurality of manners, for example, but not limited to, a manner in which the to-be-indicated information, for example, the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "first", "second", and various numeric numbers (for example, "#1" and "#2") shown in this application are merely intended to distinguish between objects for ease of description, but not to limit the scope of embodiments of this application. For example, the numeric numbers are used to differentiate between different channels, but are not for describing a particular order or sequence. It should be understood that the objects described in such a way are interchangeable in an appropriate circumstance, so that a solution other than embodiments of this application can be described.

Third, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

Fourth, a "protocol" in embodiments of this application may be a standard protocol in the communication field, for example, may include a Wi-Fi protocol, and a related protocol applied to a future communication system. This is not limited in this application.

Without loss of generality, the following describes in detail the signaling transmission method provided in embodiments of this application by using interaction between the initiator device and the responder device as an example. The initiator device may also be referred to as an initiator for short, or referred to as a transmit end device. The responder device may also be referred to as a responder for short, or referred to as a receive end device.

By way of example, and not limitation, the transmit end device may be a device having a communication capability in a WPAN, for example, an FFD or an RFD. Similarly, the receive end device may also be a device having a communication capability in the WPAN, for example, an FFD or an RFD.

It should be understood that specific types and names of the initiator device and the responder device are not limited in this application, provided that the initiator device and the responder device are communication devices that can receive and send a UWB signal and an NB signal.

It should be noted that the following uses an example in which the method provided in embodiments of this application is applied to a ranging procedure for description. The method provided in embodiments of this application may also be applied to a sensing procedure or another measurement procedure. For example, if the method provided in embodiments of this application is applied to a sensing measurement procedure, the "range-measurement cycle" provided in the following embodiments may be replaced with a "sensing measurement cycle", the "ranging block" may be replaced with a "sensing measurement block", the "ranging round" may be replaced with a "sensing measurement round", the "ranging slot" may be replaced with a "sensing measurement slot", and the "ranging configuration parameter" may be replaced with a "sensing measurement configuration parameter".

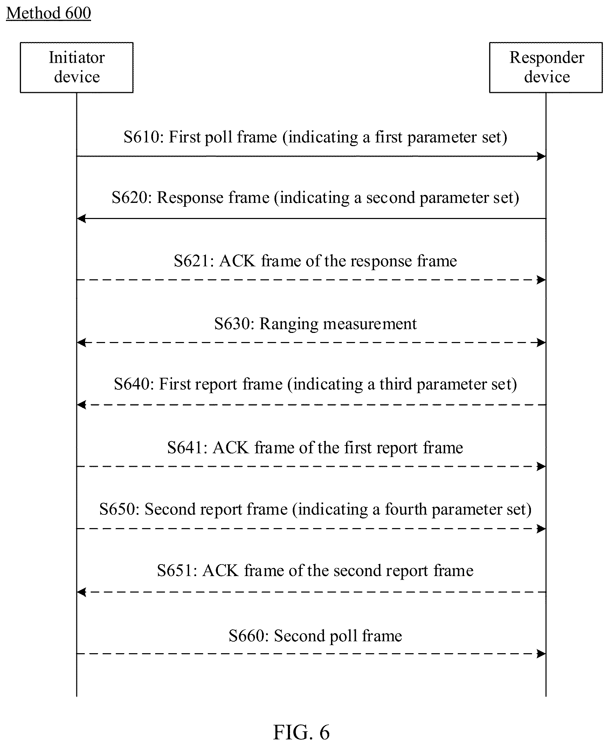

FIG. 6 is a schematic flowchart of a communication method 600 according to an embodiment of this application. As shown in FIG. 6, the method 600 may include the following steps.

S610: An initiator device sends a first poll (POLL) frame to a responder device.

Correspondingly, the responder device receives the first poll frame from the initiator device.

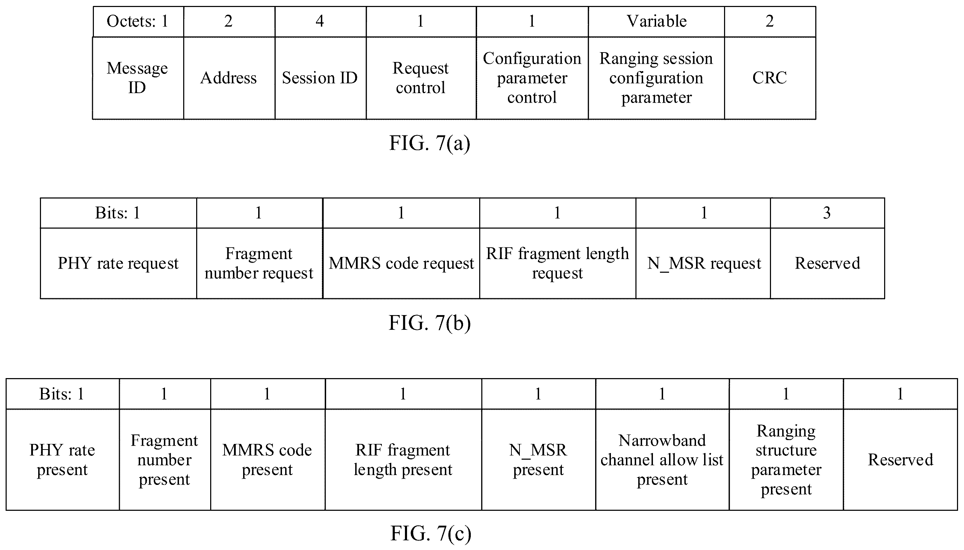

Specifically, the initiator device sends the first poll frame to the responder device in a first range-measurement cycle. The first poll frame is for triggering ranging measurement in the first range-measurement cycle. For an example of a frame format of the first poll frame, refer to the following description of FIG. 7(a) to FIG. 7(d). For brevity, details are not described herein. The first range-measurement cycle includes a first ranging control phase and a first ranging phase. Optionally, the first range-measurement cycle further includes a first measurement report phase. The first range-measurement cycle may also be referred to as a first ranging round. For more descriptions of the first range-measurement cycle, refer to the description of the ranging round in FIG. 4.

For example, the initiator device sends the first poll frame to the responder device on a narrowband channel #1.

For example, the first poll frame may be referred to as a first inquiry frame, or the first poll frame may be referred to as a first poll message or a first query message. It should be understood that a name of the frame is not limited in embodiments of this application.

The first poll frame further indicates a first parameter set that takes effect in the first range-measurement cycle, and the first parameter set includes one or more of the following parameters: a first narrowband PHY parameter, a first narrowband channel allow list, a first ranging block structure parameter, or a first UWB MMS ranging configuration parameter. It should be noted that the first parameter set takes effect in the first range-measurement cycle and takes effect after the initiator device sends the first poll frame.

The first narrowband PHY parameter is a parameter that takes effect in the first ranging control phase and/or the first measurement report phase included in the first range-measurement cycle. If the initiator device and the responder device transmit a reference signal and/or data on a narrowband channel in the first ranging control phase and/or the first measurement report phase, the first narrowband PHY parameter takes effect in the first ranging control phase and/or the first measurement report phase. It should be understood that, because the first parameter set takes effect after the initiator device sends the first poll frame, if the initiator device sends the first poll frame on the narrowband channel #1, the first narrowband PHY parameter that is carried in the first poll frame and that is indicated to take effect in the first range-measurement cycle is not necessarily the same as a narrowband PHY parameter #a used by the initiator device to send the first poll frame. The first narrowband PHY parameter may be carried in a PHY rate subfield included in the first poll frame. For more descriptions of a frame structure of the first poll frame and the PHY rate subfield, refer to FIG. 7(a) to FIG. 7(d). For brevity, details are not described herein.

For example, the first narrowband PHY parameter indicates a transmission rate of a payload of a narrowband physical protocol data unit (physical protocol data unit, PPDU) transmitted in the first ranging control phase and/or the first measurement report phase. Optionally, the first narrowband PHY parameter may further indicate a configuration parameter of a narrowband PPDU transmitted in the first ranging control phase and/or the first measurement report phase. The configuration parameter of the narrowband PPDU may include one or more of the following: a preamble length, a start-of-frame delimiter (start-of-frame delimiter, SFD) length, a physical header (physical header, PHR) length, a spreading factor used in a preamble and an SFD, a spreading factor used in the PHR and the payload of the narrowband PPDU, or a coding scheme used in the PHR and the payload.

For example, the first narrowband PHY parameter is set to a first value to indicate that the rate of the payload of the narrowband PPDU is 250 kpbs, the preamble length is 8 symbols, the SFD length is 2 symbols, the spreading factor used in the preamble and the SFD is 32, the PHR length is 2 symbols, and the spreading factor used in the PHR and the payload of the narrowband PPDU is 32 (using mandatory symbol-to-chip mapping (symbol-to-chip mapping) specified by 15-23-0100-02-04ab-nba-uwb-technical-framework-for-draft0). Forward error correction coding is not used in the PHR and the payload of the narrowband PPDU.

The first narrowband PHY parameter is set to a second value to indicate that the rate of the payload of the narrowband PPDU is 500 kpbs, the preamble length is 4 symbols, the SFD length is 2 symbols, the spreading factor used in the preamble and the SFD is 32, the PHR length is 7 symbols, and the spreading factor used in the PHR and the payload of the narrowband PPDU is 8. Convolutional code with a limited length of 7 and a code rate of 1/2 is used in the PHR and the payload of the narrowband PPDU.

The first narrowband PHY parameter is set to a third value to indicate that the rate of the payload of the narrowband PPDU is 1000 kpbs, the preamble length is 4 symbols, the SFD length is 2 symbols, the spreading factor used in the preamble and the SFD is 32, the PHR length is 7 symbols, and the spreading factor used in the PHR and the payload of the narrowband PPDU is 8. The convolutional code with the limited length of 7 and the code rate of 1/2 is used in the PHR, and the forward error correction coding is not used in the payload of the narrowband PPDU.

The first narrowband PHY parameter is set to a fourth value to indicate that the rate of the payload of the narrowband PPDU is 250 kpbs, the preamble length is 8 symbols, the SFD length is 2 symbols, the spreading factor used in the preamble and the SFD is 32, the PHR length is 7 symbols, and the spreading factor used in the PHR and the payload of the narrowband PPDU is 16 (using the mandatory symbol-to-chip mapping specified by 15-23-0100-02-04ab-nba-uwb-technical-framework-for-draft0). The convolutional code with the limited length of 7 and the code rate of 1/2 is used in the PHR and the payload of the narrowband PPDU.

The first narrowband PHY parameter is set to a fifth value to indicate that the rate of the payload of the narrowband PPDU is 1000 kpbs, the preamble length is 8 symbols, the SFD length is 2 symbols, the spreading factor used in the preamble and the SFD is 32, the PHR length is 7 symbols, and the spreading factor used in the PHR and the payload of the narrowband PPDU is 4. The convolutional code with the limited length of 7 and the code rate of 1/2 is used in the PHR and the payload of the narrowband PPDU.

The first narrowband PHY parameter is set to a sixth value to indicate that the rate of the payload of the narrowband PPDU is 250 kpbs, the preamble length is 8 symbols, the SFD length is 2 symbols, the spreading factor used in the preamble and the SFD is 32, the PHR length is 2 symbols, and the spreading factor used in the PHR and the payload of the narrowband PPDU is 32 (using optional symbol-to-chip mapping specified by 15-23-0100-02-04ab-nba-uwb-technical-framework-for-draft0). The forward error correction coding is not used in the PHR and the payload of the narrowband PPDU.

The first narrowband PHY parameter is set to a seventh value to indicate that the rate of the payload of the narrowband PPDU is 250 kpbs, the preamble length is 8 symbols, the SFD length is 2 symbols, the spreading factor used in the preamble and the SFD is 32, the PHR length is 7 symbols, and the spreading factor used in the PHR and the payload of the narrowband PPDU is 16 (using the optional symbol-to-chip mapping specified by 15-23-0100-02-04ab-nba-uwb-technical-framework-for-draft0). The convolutional code with the limited length of 7 and the code rate of 1/2 is used in the PHR and the payload of the narrowband PPDU.

The first narrowband PHY parameter is set to an eighth value to indicate that the PHY parameter configuration of the narrowband PPDU is indicated by different SFD sequences (refer to 15-23-0100-02-04ab-nba-uwb-technical-framework-for-draft0).

It should be understood that the foregoing shows, by using an example, a manner in which the first narrowband PHY parameter indicates the transmission rate of the payload of the narrowband PPDU and the configuration parameter of the narrowband PPDU. This is not limited in embodiments of this application. For example, the value of the first narrowband PHY parameter may be set to another value different from the first value to the eighth value, to indicate the transmission rate of the payload of the narrowband PPDU. For another example, the value of the first narrowband PHY parameter may be set to another value different from the first value to the eighth value, to indicate the transmission rate of the payload of the narrowband PPDU and a part of the configuration parameter of the narrowband PPDU. It should be further understood that, in a specific implementation, the transmission rate of the payload of the narrowband PPDU indicated by the first narrowband PHY parameter may be different from the transmission rate in the foregoing example, and/or the configuration parameter of the narrowband PPDU indicated by the first narrowband PHY parameter may be different from the configuration parameter in the foregoing example.

The first narrowband channel allow list is a parameter that takes effect in the first ranging control phase and/or the first measurement report phase. The first narrowband channel allow list includes one or more available narrowband channels, and the initiator device and the responder device may transmit the reference signal and/or data on the available narrowband channel indicated in the first narrowband channel allow list in the first ranging control phase and/or the first measurement report phase. The first narrowband channel allow list may be carried in a narrowband channel allow list subfield included in the first poll frame. For more descriptions of the frame structure of the first poll frame and the narrowband channel allow list subfield, refer to FIG. 7(a) to FIG. 7(d). For brevity, details are not described herein.

The first ranging block structure parameter may include one or more of the following: ranging round duration, ranging block duration, a ranging block index, a ranging round index, or a hopping mode. The ranging round duration indicates duration of the first range-measurement cycle, and the ranging block duration indicates duration of a ranging block that includes the first range-measurement cycle. The hopping mode indicates whether to hop (or referred to as frequency hop) in the first range-measurement cycle, and/or a hopping operating mode (or referred to as a frequency hopping operating mode) in the first range-measurement cycle. The ranging round duration indicates an index of the first range-measurement cycle, and the ranging block index indicates an index of the ranging block that includes the first range-measurement cycle. The first ranging block structure parameter may be carried in a ranging structure parameter subfield included in the first poll frame. For more descriptions of the frame structure of the first poll frame and the ranging structure parameter subfield, refer to FIG. 7(a) to FIG. 7(d). For brevity, details are not described herein.

The first UWB MMS ranging configuration parameter may include one or more of the following: an RSF fragment number, an RIF fragment number, an MMRS code index, an MMRS gap size, an RIF fragment length, or a number of MMRS sequence repetitions (denoted as N_MSR). The RSF fragment number indicates a number of RSF fragments used in the first ranging phase included in the first range-measurement cycle, and the RIF fragment number indicates a number of RIF fragments used in the first ranging phase. The MMRS code index indicates MMRS code used in each RSF fragment in the first ranging phase, and the MMRS gap size indicates a size of a gap inserted into the MMRS code. The RIF fragment length indicates a length of STS code used in each RIF fragment in the first ranging phase. The N_MSR indicates the number of repetitions of the MMRS code used in an RSF fragment. The RSF fragment number and/or the RIF fragment number may be carried in a fragment number subfield included in the first poll frame. The MMRS code index and the MMRS gap size may be carried in an MMRS code subfield included in the first poll frame. The RIF fragment length may be carried in an RIF fragment length subfield included in the first poll frame. The N_MSR may be carried in an N_MSR subfield included in the first poll frame. For the frame structure of the first poll frame and more descriptions of the subfields, refer to FIG. 7(a) to FIG. 7(d). For brevity, details are not described herein.

The narrowband PHY parameter #a used by the initiator device to send the first poll frame includes one or more of the following parameters: a narrowband PHY parameter #a, a narrowband channel allow list #a, a ranging block structure parameter #a, or a UWB MMS ranging configuration parameter #a. For more descriptions of a parameter set #a, refer to the foregoing description of the first parameter set. If the initiator device and the responder device do not engage in the initialization and negotiation phase before starting the ranging session, and an upper layer of the initiator device and the responder device does not set a ranging session configuration, a parameter included in the parameter set #a is a default parameter. Alternatively, if the initiator device and the responder device do not engage in the initialization and negotiation phase before starting the ranging session, and an upper layer of the initiator device and the responder device sets or updates a ranging session configuration, a parameter included in the parameter set #a is a parameter updated or set by the upper layer of the initiator device and the responder device. Alternatively, if the initiator device and the responder device negotiate a ranging session configuration by engaging in the initialization and negotiation phase before starting the ranging session, a parameter included in the parameter set #a is a parameter determined by the initiator device and the responder device through negotiation.

For example, the initiator device determines the first parameter set based on a channel condition in first duration. Duration from an end moment of the first duration and a start moment at which the initiator device sends the first poll frame does not exceed a first duration threshold. Alternatively, the initiator device determines the first parameter set based on a channel condition at a first moment, and duration from the first moment to a start moment at which the initiator device sends the first poll frame does not exceed a first duration threshold. The channel condition is a channel condition between the initiator device and the responder device. The first duration threshold may be determined based on a change of the channel condition. For example, if the channel condition changes quickly, a value of the first duration threshold is small; or if the channel condition changes slowly, a value of the first duration threshold is large. For example, if the channel condition remains unchanged in the first duration or duration #1 after the first moment, or a change amount of the channel condition does not affect a value of a parameter included in the first parameter set, the first duration threshold may be a value less than or equal to the duration #1.

In another embodiment of this application, the first poll frame is further for requesting the responder device to suggest a parameter set for taking effect in a second range-measurement cycle, where the second range-measurement cycle is after the first range-measurement cycle. The second range-measurement cycle may also be referred to as a second ranging round. For more descriptions of the second range-measurement cycle, refer to the description of the ranging round in FIG. 4. The parameter set that is requested by the first poll frame and that is suggested by the responder device for taking effect in the second range-measurement cycle is a parameter set indicated by the responder device in a response frame or a first report frame. For the parameter set indicated by the responder in the response frame, refer to the following descriptions in S620. For the parameter set indicated by the responder in the first report frame, refer to the following descriptions in S640. For brevity, details are not described herein.

For example, the parameter set that is requested by the first poll frame and that is suggested for taking effect in the second range-measurement cycle includes one or more of the following parameters: a narrowband PHY parameter or a UWB MMS ranging configuration parameter.

With reference to FIG. 7(a) to FIG. 7(d), the following describes a frame structure of a first poll frame provided in an embodiment of this application.

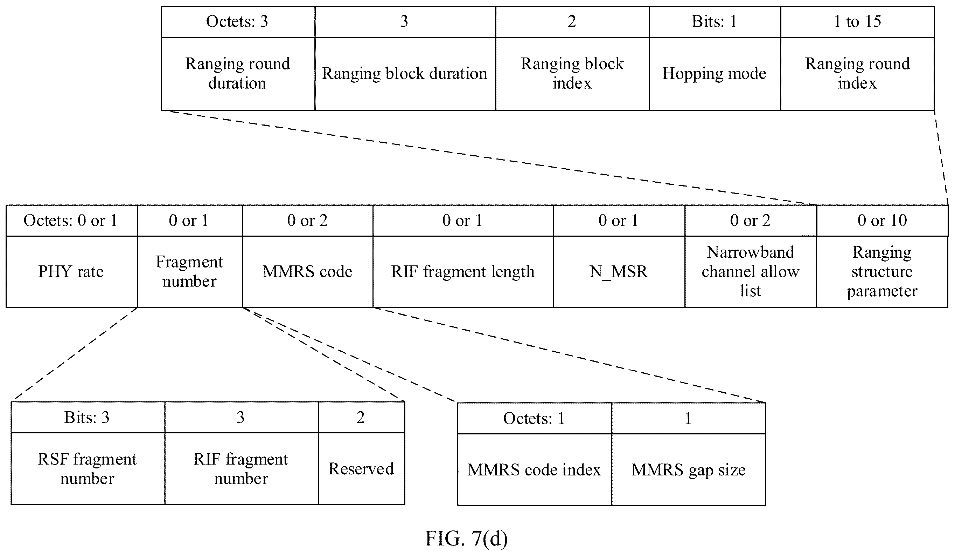

As shown in FIG. 7(a), the first poll frame provided in this embodiment of this application may include one or more of the following fields: a message identifier (identifier, ID) field, occupying 1 octet (byte) and indicating an identifier of the first poll frame, where, for example, if a value of the message ID field is 0, it represents that a frame including the message ID field is the first poll frame; an address field, occupying 2 octets and indicating a target receive end (that is, a responder device) of the first poll frame; a session ID field, occupying 1 octet and indicating an identifier of a ranging session corresponding to a first range-measurement cycle; a request control field, occupying 1 octet and indicating that the responder device is requested to suggest a parameter for taking effect in a second range-measurement cycle; a configuration parameter control field, occupying 1 octet; a ranging session configuration parameter field, occupying a variable number of octets; and a cyclic redundancy check (cyclic redundancy check, CRC) field, occupying 2 octets. It should be understood that the request control field, the configuration parameter control field, or the ranging session configuration parameter field included in the first poll frame may have another name. Names of the fields included in the first poll frame are not limited in embodiments of this application. For the request control field in the first poll frame shown in FIG. 7(a), refer to the description of FIG. 7(b). For the configuration parameter control field, refer to the description of FIG. 7(c). For the ranging session configuration parameter field, refer to the description of FIG. 7(d). For more descriptions of other fields included in the first poll frame, refer to an existing standard or protocol.

As shown in FIG. 7(b), the request control field included in the first poll frame may include one or more of the following subfields: a PHY rate request subfield, occupying 1 bit (bit); a fragment number request subfield, occupying 1 bit; an MMRS code request subfield, occupying 1 bit; an RIF fragment length request subfield, occupying 1 bit; an N_MSR request subfield, occupying 1 bit; and a reserved (reserved) subfield, occupying 3 bits. It should be understood that each subfield included in the request control field may have another name. Names of the subfields included in the request control field are not limited in embodiments of this application.

The PHY rate request subfield indicates whether the responder device is requested to suggest a narrowband PHY parameter. For example, when the PHY rate request subfield is set to "0", it indicates that the responder device is not requested to suggest a narrowband PHY parameter; and when the PHY rate request subfield is set to "1", it indicates that the responder device is requested to suggest a narrowband PHY parameter.

The fragment number request subfield indicates whether the responder device is requested to suggest an RSF fragment number and/or an RIF fragment number for MMS ranging. For example, when the fragment number request subfield is set to "0", it indicates that the responder device is not requested to suggest an RSF fragment number and/or an RIF fragment number for MMS ranging; and when the fragment number request subfield is set to "1", it indicates that the responder device is requested to suggest an RSF fragment number and/or an RIF fragment number for MMS ranging.

The MMRS code request subfield indicates whether the responder device is requested to suggest an MMRS code index and/or an MMRS gap size for MMS ranging. For example, when the MMRS code request subfield is set to "0", it indicates that the responder device is not requested to suggest an MMRS code index and/or an MMRS gap size for MMS ranging; and when the MMRS code request subfield is set to "1", it indicates that the responder device is requested to suggest an MMRS code index and/or an MMRS gap size for MMS ranging.

The RIF fragment length request subfield indicates whether the responder device is requested to suggest an RIF fragment length for MMS ranging. For example, when the RIF fragment length request subfield is set to "0", it indicates that the responder device is not requested to suggest an RIF fragment length for MMS ranging; and when the RIF fragment length request subfield is set to "1", it indicates that the responder device is requested to suggest an RIF fragment length for MMS ranging.

The N_MSR request subfield indicates whether the responder device is requested to suggest an N_MSR value for MMS ranging. For example, when the N_MSR request subfield is set to "0", it indicates that the responder device is not requested to suggest an N_MSR value for MMS ranging; and when the N_MSR request subfield is set to "1", it indicates that the responder device is requested to suggest an N_MSR value for MMS ranging.

It should be understood that the foregoing describes, by using an example, meanings represented by different values of the subfields included in the request control field. Possible values of the subfields and meanings represented by the different values are not limited in embodiments of this application. The PHY rate request subfield is used as an example. When the PHY rate request subfield is set to "1", it indicates that the responder device is not requested to suggest a narrowband PHY parameter; and when the PHY rate request subfield is set to "0", it indicates that the responder device is requested to suggest a narrowband PHY parameter.

As shown in FIG. 7(c), the configuration parameter control field included in the first poll frame may include one or more of the following subfields: a PHY rate present subfield, occupying 1 bit; a fragment number present subfield, occupying 1 bit; an MMRS code present subfield, occupying 1 bit; an RIF fragment length present subfield, occupying 1 bit; an N_MSR present subfield, occupying 1 bit; a narrowband channel allow list (NbaChannelAllowList) present subfield, occupying 1 bit; a ranging structure parameter present subfield, occupying 1 bit; and a reserved subfield, occupying 1 bit. It should be understood that each subfield included in the configuration parameter control field may have another name. Names of the subfields included in the configuration parameter control field are not limited in embodiments of this application.

The PHY rate present subfield indicates whether the ranging session configuration parameter field includes a PHY rate subfield. For example, when the PHY rate present subfield is set to "0", it indicates that the ranging session configuration parameter field does not include the PHY rate subfield; and when the PHY rate present subfield is set to "1", it indicates that the ranging session configuration parameter field includes the PHY rate subfield.

The fragment number present subfield indicates whether the ranging session configuration parameter field includes a fragment number subfield. For example, when the fragment number present subfield is set to "0", it indicates that the ranging session configuration parameter field does not include the fragment number subfield; and when the fragment number present subfield is set to "1", it indicates that the ranging session configuration parameter field includes the fragment number subfield.

The MMRS code present subfield indicates whether the ranging session configuration parameter field includes an MMRS code subfield. For example, when the MMRS code present subfield is set to "0", it indicates that the ranging session configuration parameter field does not include the MMRS code subfield; and when the MMRS code present subfield is set to "1", it indicates that the ranging session configuration parameter field includes the MMRS code subfield.

The RIF fragment length present subfield indicates whether the ranging session configuration parameter field includes an RIF fragment length subfield. For example, when the RIF fragment length present subfield is set to "0", it indicates that the ranging session configuration parameter field does not include the RIF fragment length subfield; and when the RIF fragment length present subfield is set to "1", it indicates that the ranging session configuration parameter field includes the RIF fragment length subfield.

The N_MSR present subfield indicates whether the ranging session configuration parameter field includes an N_MSR subfield. For example, when the N_MSR present subfield is set to "0", it indicates that the ranging session configuration parameter field does not include the N_MSR subfield; and when the N_MSR present subfield is set to "1", it indicates that the ranging session configuration parameter field includes the N_MSR subfield.

The narrowband channel allow list present subfield indicates whether the ranging session configuration parameter field includes a narrowband channel allow list subfield. For example, when the narrowband channel allow list present subfield is set to "0", it indicates that the ranging session configuration parameter field does not include the narrowband channel allow list subfield; and when the narrowband channel allow list present subfield is set to "1", it indicates that the ranging session configuration parameter field includes the narrowband channel allow list subfield.

The ranging structure parameter present subfield indicates whether the ranging session configuration parameter field includes a ranging structure parameter subfield. For example, when the ranging structure parameter present subfield is set to "0", it indicates that the ranging session configuration parameter field does not include the ranging structure parameter subfield; and when the ranging structure parameter present subfield is set to "1", it indicates that the ranging session configuration parameter field includes the ranging structure parameter subfield.

It should be understood that the foregoing describes, by using an example, meanings represented by different values of the subfields included in the configuration parameter control field. Possible values of the subfields and meanings represented by the different values are not limited in embodiments of this application. The PHY rate present subfield is used as an example. When the PHY rate present subfield is set to "1", it indicates that the ranging session configuration parameter field does not include the PHY rate subfield; and when the PHY rate present subfield is set to "0", it indicates that the ranging session configuration parameter field includes the PHY rate subfield.

As shown in FIG. 7(d), the ranging session configuration parameter field included in the first poll frame may include one or more of the following subfields: a PHY rate subfield, occupying 0 or 1 octet; a fragment number subfield, occupying 0 or 1 octet; an MMRS code subfield, occupying 0 or 2 octets; an RIF fragment length subfield, occupying 0 or 1 octet; an N_MSR subfield, occupying 0 or 1 octet; a narrowband channel allow list subfield, occupying 0 or 2 octets; and a ranging structure parameter subfield, occupying 0 or 10 octets. It should be understood that each subfield included in the ranging session configuration parameter field may have another name. Names of the subfields included in the ranging session configuration parameter field are not limited in embodiments of this application. It should be further understood that if a specific subfield occupies 0 octets, it represents that the ranging session configuration parameter field does not include the subfield. The PHY rate subfield is used as an example. If the PHY rate subfield occupies 0 octets, it represents that the ranging session configuration parameter field does not include the PHY rate subfield. It should be further understood that, when the first poll frame includes the configuration parameter control field, if the configuration parameter control field indicates that the ranging session configuration parameter field does not include a specific subfield, the subfield occupies 0 octets. For example, if the PHY rate present subfield included in the configuration parameter control field indicates that the ranging session configuration parameter field does not include the PHY rate subfield, the PHY rate subfield occupies 0 octets.

The PHY rate subfield indicates a first narrowband PHY parameter. The fragment number subfield indicates an RSF fragment number and/or an RIF fragment number included in a first UWB MMS ranging configuration parameter. For example, the fragment number subfield includes an RSF fragment number subfield indicating the RSF fragment number, and/or an RIF fragment number subfield indicating the RIF fragment number. The MMRS code subfield indicates an MMRS code index and/or an MMRS gap size included in the first UWB MMS ranging configuration parameter. For example, the MMRS code subfield includes an MMRS code index subfield indicating the MMRS code index, and/or an MMRS gap size subfield indicating the MMRS gap size. The RIF fragment length subfield indicates an RIF fragment length included in the first UWB MMS ranging configuration parameter. The N_MSR subfield indicates N_MSR included in the first UWB MMS ranging configuration parameter. The narrowband channel allow list subfield indicates a first narrowband channel allow list. The ranging structure parameter subfield indicates a first ranging block structure parameter. For example, the ranging structure parameter subfield may include one or more of the following subfields: a ranging round duration subfield, occupying 3 octets and indicating duration of the first range-measurement cycle; a ranging block duration subfield, occupying 3 octets and indicating duration of a ranging block that includes the first range-measurement cycle; a ranging block index subfield, occupying 2 octets and indicating an index of the ranging block; a ranging round index subfield, occupying 1 to 15 bits and indicating an index of a ranging round; and a hopping mode subfield, occupying 1 bit and indicating whether to hop in the first range-measurement cycle. For example, when the hopping mode subfield is set to "1", it indicates to hop in the first range-measurement cycle; and when the hopping mode subfield is set to "0", it indicates not to hop in the first range-measurement cycle.

It should be noted that FIG. 7(a) to FIG. 7(d) are a diagram of the frame structure of the first poll frame by using an example. The frame structure of the first poll frame is not limited in embodiments of this application. For example, the request control field included in the first poll frame may occupy 1 bit, and indicates whether the responder device is requested to suggest a parameter set for taking effect in the second range-measurement cycle. When the request control field is set to "0", it indicates that the responder device is requested to suggest a parameter set for taking effect in the second range-measurement cycle. When the request control field is set to "1", it indicates that the responder device is not requested to suggest a parameter set for taking effect in the second range-measurement cycle.

S620: The responder device sends a response (RESPONSE) frame to the initiator device.

Correspondingly, the initiator device receives the response frame from the responder device.

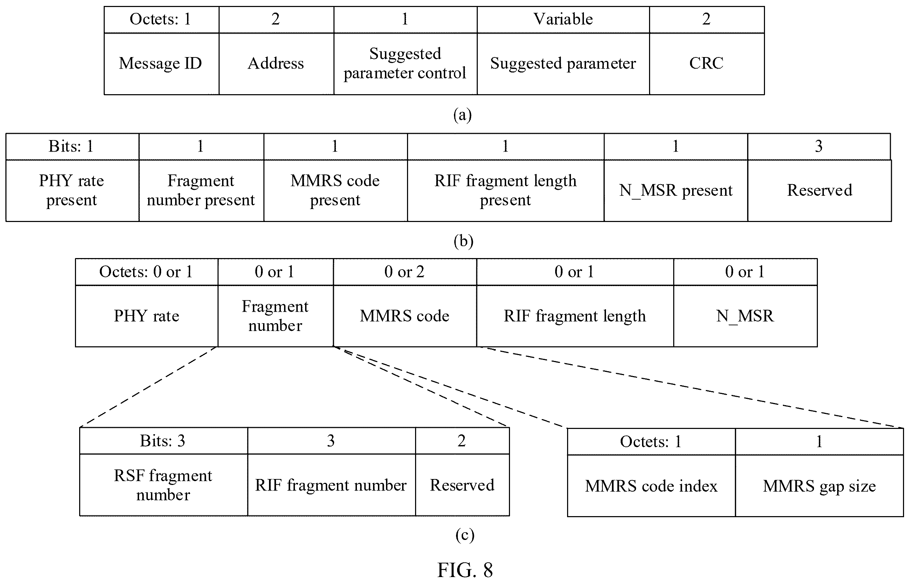

The response frame is a response frame of the first poll frame. For an example of a frame format of the response frame, refer to the following descriptions of FIG. 8. For brevity, details are not described herein.

For example, if the first parameter set indicated by the first poll frame includes the first narrowband PHY parameter, the responder device may send the response frame to the initiator device based on the first narrowband PHY parameter in the first ranging control phase. Correspondingly, the initiator device receives the response frame from the responder device based on the first narrowband PHY parameter in the first ranging control phase.

For example, if the first parameter set indicated by the first poll frame includes the first narrowband channel allow list, the responder device sends the response frame on a second narrowband channel included in the first narrowband channel allow list. Correspondingly, the initiator device receives the response frame on the second narrowband channel included in the first narrowband channel allow list. Optionally, when the initiator device sends the first poll frame on the narrowband channel #1, the second narrowband channel is the same as the narrowband channel #1.

For example, the response frame may also be referred to as a response message.

In another embodiment of this application, if the first poll frame is further for requesting the responder device to suggest a parameter set for taking effect in the second range-measurement cycle, the response frame further indicates a second parameter set that is suggested for taking effect in the second range-measurement cycle, and the second parameter set includes one or more of the following parameters: a second narrowband PHY parameter or a second UWB MMS ranging configuration parameter. The second narrowband PHY parameter is a parameter that is suggested by the responder device for taking effect in a second ranging control phase and/or a second measurement report phase included in the second range-measurement cycle. For more descriptions of the second parameter set, refer to the related descriptions of the first parameter set in S610.

For example, if the PHY rate request subfield included in the first poll frame indicates that the responder device is requested to suggest a narrowband PHY parameter, the second parameter set includes the second narrowband PHY parameter. If the fragment number request subfield included in the first poll frame indicates that the responder device is requested to suggest an RSF fragment number and/or an RIF fragment number, the second UWB MMS ranging configuration parameter includes the RSF fragment number and/or the RIF fragment number. If the MMRS code request subfield included in the first poll frame indicates that the responder device is requested to suggest an MMRS code index and/or an MMRS gap size, the second UWB MMS ranging configuration parameter includes the MMRS code index and/or the MMRS gap size. If the RIF fragment length request subfield included in the first poll frame indicates that the responder device is requested to suggest an RIF fragment length, the second UWB MMS ranging configuration parameter includes the RIF fragment length. If the N_MSR request subfield included in the first poll frame indicates that the responder device is requested to suggest a value of an N_MSR, the second UWB MMS ranging configuration parameter includes the N_MSR.

In another embodiment of this application, if the first poll frame is further for requesting the responder device to suggest a parameter set for taking effect in the second range-measurement cycle, and the first range-measurement cycle does not include the first measurement report phase, or the responder device does not send the first report frame in the first measurement report phase, the response frame further indicates a second parameter set that is suggested for taking effect in the second range-measurement cycle.

It should be noted that, if the first measurement report phase is supported out-of-band, the first range-measurement cycle does not include the first measurement report phase. If the first measurement report phase is supported in-band, the first range-measurement cycle includes the first measurement report phase. In addition, if the first measurement report phase includes one measurement report slot, and a report mode indicates that the initiator device sends a measurement report message, the responder device does not send the first report frame in the first measurement report phase. The report mode is determined by the initiator device and the responder device through negotiation in the initialization and setup phase before the ranging session, is set by an upper layer, or is a default report mode.

For example, the responder device determines the second parameter set based on a channel condition in second duration. Duration from an end moment of the second duration to a start moment at which the responder device sends the response frame does not exceed a second duration threshold. Alternatively, the responder device determines the second parameter set based on a channel condition at a second moment, and duration from the second moment and a start moment at which the responder device sends the response frame does not exceed a second duration threshold. The channel condition is a channel condition between the initiator device and the responder device. For more descriptions of the second duration threshold, refer to the foregoing descriptions of the first duration threshold in S610.

With reference to FIG. 8, the following describes a frame structure of a response frame provided in an embodiment of this application.

As shown in (a) in FIG. 8, the response frame provided in this embodiment of this application may include one or more of the following fields: a message ID field, occupying 1 octet and indicating an identifier of the response frame, where, for example, if a value of the message ID field is 1, it represents that a frame including the message ID field is the response frame; an address field, occupying 2 octets and indicating a target receive end (that is, an initiator device) of a poll frame; a suggested parameter control field, occupying 1 octet; a suggested parameter field, occupying a variable number of octets; and a CRC field, occupying 2 octets. It should be understood that the suggested parameter control field or the suggested parameter field included in the response frame may have another name. Names of the fields included in the response frame are not limited in embodiments of this application. For the suggested parameter control field in the response frame shown in (a) in FIG. 8, refer to the description of (b) in FIG. 8. For the suggested parameter field, refer to the description of (c) in FIG. 8. For more descriptions of other fields included in the response frame, refer to an existing standard or protocol.

As shown in (b) in FIG. 8, the suggested parameter control field included in the response frame may include one or more of the following subfields: a PHY rate present subfield, occupying 1 bit; a fragment number present subfield, occupying 1 bit; an MMRS code present subfield, occupying 1 bit; an RIF fragment length present subfield, occupying 1 bit; an N_MSR present subfield, occupying 1 bit; and a reserved subfield, occupying 3 bits. It should be understood that each subfield included in the suggested parameter control field may have another name. Names of the subfields included in the suggested parameter control field are not limited in embodiments of this application.

The PHY rate present subfield indicates whether the suggested parameter field includes a PHY rate subfield. For example, when the PHY rate present subfield is set to "0", it indicates that the suggested parameter field does not include the PHY rate subfield; and when the PHY rate present subfield is set to "1", it indicates that the suggested parameter field includes the PHY rate subfield.

The fragment number present subfield indicates whether the suggested parameter field includes a fragment number subfield. For example, when the fragment number present subfield is set to "0", it indicates that the suggested parameter field does not include the fragment number subfield; and when the fragment number present subfield is set to "1", it indicates that the suggested parameter field includes the fragment number subfield.

The MMRS code present subfield indicates whether the suggested parameter field includes an MMRS code subfield. For example, when the MMRS code present subfield is set to "0", it indicates that the suggested parameter field does not include the MMRS code subfield; and when the MMRS code present subfield is set to "1", it indicates that the suggested parameter field includes the MMRS code subfield.

The RIF fragment length present subfield indicates whether the suggested parameter field includes an RIF fragment length subfield. For example, when the RIF fragment length present subfield is set to "0", it indicates that the suggested parameter field does not include the RIF fragment length subfield; and when the RIF fragment length present subfield is set to "1", it indicates that the suggested parameter field includes the RIF fragment length subfield.

The N_MSR present subfield indicates whether the suggested parameter field includes an N_MSR subfield. For example, when the N_MSR present subfield is set to "0", it indicates that the suggested parameter field does not include the N_MSR subfield; and when the N_MSR present subfield is set to "1", it indicates that the suggested parameter field includes the N_MSR subfield.

It should be understood that the foregoing describes, by using an example, meanings represented by different values of the subfields included in the suggested parameter control field. Possible values of the subfields and meanings represented by the different values are not limited in embodiments of this application. The PHY rate present subfield is used as an example. When the PHY rate present subfield is set to "1", it indicates that the suggested parameter field does not include the PHY rate subfield; and when the PHY rate present subfield is set to "0", it indicates that the suggested parameter field includes the PHY rate subfield.

As shown in (c) in FIG. 8, the suggested parameter field included in the response frame may include one or more of the following subfields: a PHY rate subfield, occupying 0 or 1 octet; a fragment number subfield, occupying 0 or 1 octet; an MMRS code subfield, occupying 0 or 2 octets; an RIF fragment length subfield, occupying 0 or 1 octet; and an N_MSR subfield, occupying 0 or 1 octet. It should be understood that each subfield included in the suggested parameter field may have another name. Names of the subfields included in the suggested parameter field are not limited in embodiments of this application. It should be further understood that if a specific subfield occupies 0 octets, it represents that the suggested parameter field does not include the subfield. The PHY rate subfield is used as an example. If the PHY rate subfield occupies 0 octets, it represents that the suggested parameter field does not include the PHY rate subfield. It should be further understood that, when the response frame includes the suggested parameter control field, if the suggested parameter control field indicates that the suggested parameter field does not include a specific subfield, the subfield occupies 0 octets. For example, if the PHY rate present subfield included in the suggested parameter control field indicates that the suggested parameter field does not include the PHY rate subfield, the PHY rate subfield occupies 0 octets.

The PHY rate subfield indicates a second narrowband PHY parameter. The fragment number subfield indicates an RSF fragment number and/or an RIF fragment number included in a second UWB MMS ranging configuration parameter. For example, the fragment number subfield includes an RSF fragment number subfield indicating the RSF fragment number, and/or an RIF fragment number subfield indicating the RIF fragment number. The MMRS code subfield indicates an MMRS code index and/or an MMRS gap size included in the second UWB MMS ranging configuration parameter. For example, the MMRS code subfield includes an MMRS code index subfield indicating the MMRS code index, and/or an MMRS gap size subfield indicating the MMRS gap size. The RIF fragment length subfield indicates an RIF fragment length included in the second UWB MMS ranging configuration parameter. The N_MSR subfield indicates N_MSR included in the second UWB MMS ranging configuration parameter.

In another embodiment of this application, the method 600 further includes S621.

S621: The initiator device sends an acknowledgment (acknowledgment, ACK) frame of the response frame to the responder device.

Correspondingly, the responder device receives the ACK frame of the response frame from the initiator device.

Specifically, after the initiator device receives the response frame, if the initiator device determines to use the second parameter set in the second range-measurement cycle, the initiator device sends the ACK frame of the response frame to the responder device.

In another embodiment of this application, the method 600 further includes S630.

S630: The initiator device and the responder device perform ranging measurement.

For example, if the first parameter set includes the first ranging block structure parameter and/or the first UWB MMS ranging configuration parameter, the initiator device and the responder device perform ranging measurement based on the first ranging block structure parameter and/or the first UWB MMS ranging configuration parameter in the first ranging phase.

It should be noted that the initiator device and the responder device may perform ranging measurement through a UWB channel. The UWB channel is determined by the initiator device and the responder device through negotiation in the initialization and setup phase before the ranging session, is set by an upper layer, or is default.

In another embodiment of this application, the method 600 further includes S640.

S640: The responder device sends the first report (REPORT) frame to the initiator device.

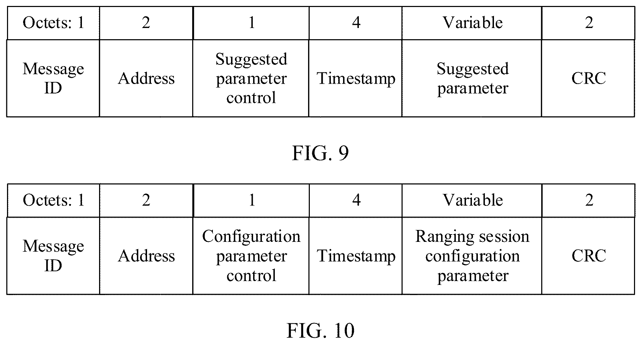

Correspondingly, the initiator device receives the first report frame from the responder device. For an example of a frame format of the first report frame, refer to the following descriptions in FIG. 9. For brevity, details are not described herein.

If the first range-measurement cycle includes the first measurement report phase, and the responder device may send the first report frame in the first measurement report phase, after the initiator device and the responder device perform the ranging measurement, the responder device sends the first report frame to the initiator device based on a ranging result, where the first report frame includes a ranging measurement report obtained by the responder device by performing the ranging measurement.

It should be noted that if the first measurement report phase is supported in-band, the first range-measurement cycle includes the first measurement report phase. In addition, if the first measurement report phase includes one measurement report slot, and a report mode indicates that the responder device sends a measurement report message, the responder device may send the first report frame in the first measurement report phase. Alternatively, if the first measurement report phase includes two measurement report slots, the responder device may send the first report frame in a first measurement report slot.

For example, if the first parameter set indicated by the first poll frame includes the first narrowband PHY parameter, the responder device may send the first report frame to the initiator device based on the first narrowband PHY parameter in the first measurement report phase. Correspondingly, the initiator device receives the first report frame from the responder device based on the first narrowband PHY parameter in the first measurement report phase.

For example, if the first parameter set indicated by the first poll frame includes the first narrowband channel allow list, the responder device sends the first report frame on a third narrowband channel included in the first narrowband channel allow list. Correspondingly, the initiator device receives the first report frame on the third narrowband channel included in the first narrowband channel allow list.

Optionally, the second narrowband channel used by the responder device to send the response frame is the same as or different from the third narrowband channel. For example, if the first parameter set includes the first ranging block structure parameter, and the hopping mode included in the first ranging block structure parameter indicates to hop in the first range-measurement cycle, the second narrowband channel is different from the third narrowband channel; or if the hopping mode included in the first ranging block structure parameter indicates not to hop in the first range-measurement cycle, the second narrowband channel is the same as the third narrowband channel.

For example, the first report frame may also be referred to as a first report message.

In another embodiment of this application, if the first poll frame is further for requesting the responder device to suggest a parameter set for taking effect in the second range-measurement cycle, the first report frame further indicates a third parameter set that is suggested for taking effect in the second range-measurement cycle, and the third parameter set includes one or more of the following parameters: a third narrowband PHY parameter or a third UWB MMS ranging configuration parameter. The third narrowband PHY parameter is a parameter that is suggested by the responder device for taking effect in the second ranging control phase and/or the second measurement report phase included in the second range-measurement cycle. For more descriptions of the third parameter set, refer to the related descriptions of the first parameter set in S610.

For example, if the PHY rate request subfield included in the first poll frame indicates that the responder device is requested to suggest a narrowband PHY parameter, the third parameter set includes the third narrowband PHY parameter. If the fragment number request subfield included in the first poll frame indicates that the responder device is requested to suggest an RSF fragment number and/or an RIF fragment number, the third UWB MMS ranging configuration parameter includes the RSF fragment number and/or the RIF fragment number. If the MMRS code request subfield included in the first poll frame indicates that the responder device is requested to suggest an MMRS code index and/or an MMRS gap size, the third UWB MMS ranging configuration parameter includes the MMRS code index and/or the MMRS gap size. If the RIF fragment length request subfield included in the first poll frame indicates that the responder device is requested to suggest an RIF fragment length, the third UWB MMS ranging configuration parameter includes the RIF fragment length. If the N_MSR request subfield included in the first poll frame indicates that the responder device is requested to suggest a value of an N_MSR, the third UWB MMS ranging configuration parameter includes the N_MSR.

For example, the responder device determines the third parameter set based on a channel condition in third duration. Duration from an end moment of the third duration to a start moment at which the responder device sends the first report frame does not exceed a third duration threshold. Alternatively, the responder device determines the third parameter set based on a channel condition at a third moment, and duration from the third moment and a start moment at which the responder device sends the first report frame does not exceed a third duration threshold. The channel condition is a channel condition between the initiator device and the responder device. For more descriptions of the third duration threshold, refer to the foregoing descriptions of the first duration threshold in S610.

With reference to FIG. 9, the following describes a frame structure of a first report frame provided in an embodiment of this application.

As shown in FIG. 9, the first report frame provided in this embodiment of this application may include one or more of the following fields: a message ID field, occupying 1 octet and indicating an identifier of the first report frame, where, for example, if a value of the message ID field is 2, it represents that a frame including the message ID field is the first report frame; an address field, occupying 2 octets and indicating a target receive end (that is, an initiator device) of the first report frame; a suggested parameter control field, occupying 1 octet; a timestamp field, occupying 4 octets; a suggested parameter field, occupying a variable number of octets; and a CRC field, occupying 2 octets. It should be understood that the suggested parameter control field or the suggested parameter field included in the first report frame may have another name. Names of the fields included in the first report frame are not limited in embodiments of this application. For a structure of the suggested parameter control field in the first report frame shown in FIG. 9, refer to the foregoing description of (b) in FIG. 8. For a structure of the suggested parameter field, refer to the foregoing description of (c) in FIG. 8. For more descriptions of other fields included in the first report frame, refer to an existing standard or protocol.

In another embodiment of this application, the method 600 further includes S641.

S641: The initiator device sends an ACK frame of the first report frame to the responder device.

Correspondingly, the responder device receives the ACK frame of the first report frame from the initiator device.

Specifically, after the initiator device receives the first report frame, if the initiator device determines to use the third parameter set in the second range-measurement cycle, the initiator device sends the ACK frame of the first report frame to the responder device.

It should be understood that, if the response frame indicates the second parameter set, and the initiator device sends the ACK frame of the response frame to the responder device, after the initiator device sends the ACK frame of the first report frame to the responder device, a parameter set that takes effect in the second range-measurement cycle is the third parameter set instead of the second parameter set.

In another embodiment of this application, the method 600 further includes S650.

S650: The initiator device sends a second report frame to the responder device. For an example of a frame format of the second report frame, refer to the following description in FIG. 10. For brevity, details are not described herein.

Correspondingly, the responder device receives the second report frame from the initiator device.

If the first range-measurement cycle includes the first measurement report phase, and the initiator device may send the second report frame in the first measurement report phase, after the initiator device and the responder device perform the ranging measurement, the initiator device sends the second report frame to the responder device based on a ranging result, where the second report frame includes a ranging measurement report obtained by the initiator device by performing the ranging measurement.

It should be noted that if the first measurement report phase is supported in-band, the first range-measurement cycle includes the first measurement report phase. In addition, if the first measurement report phase includes one measurement report slot, and a report mode indicates that the initiator device sends a measurement report message, the initiator device may send the second report frame in the first measurement report phase. Alternatively, if the first measurement report phase includes two measurement report slots, the initiator device may send the second report frame in a second measurement report slot.

For example, if the first parameter set indicated by the first poll frame includes the first narrowband PHY parameter, the initiator device may send the second report frame to the initiator device based on the first narrowband PHY parameter in the first measurement report phase. Correspondingly, the responder device receives the second report frame from the initiator device based on the first narrowband PHY parameter in the first measurement report phase.

For example, if the first parameter set indicated by the first poll frame includes the first narrowband channel allow list, the initiator device sends the second report frame on a first narrowband channel included in the first narrowband channel allow list. Correspondingly, the responder device receives the second report frame on the first narrowband channel included in the first narrowband channel allow list.

Optionally, the third narrowband channel used by the responder device to send the first report frame is the same as or different from the first narrowband channel.

For example, the second report frame may also be referred to as a second report message.

In another embodiment of this application, the second report frame further indicates a fourth parameter set that takes effect in the second range-measurement cycle, and the fourth parameter set includes one or more of the following parameters: a fourth narrowband PHY parameter, a second narrowband channel allow list, a second ranging block structure parameter, or a fourth UWB MMS ranging configuration parameter. For more descriptions of the fourth parameter set, refer to the foregoing description of the first parameter set in S610.

For example, if the response frame received by the initiator device indicates the second parameter set, and the initiator device fails to receive the first report frame, or the first report frame received by the initiator device does not indicate the third parameter set, the initiator device may determine the fourth parameter set based on the second parameter set. For example, the fourth narrowband PHY parameter included in the fourth parameter set is the same as the second narrowband PHY parameter included in the second parameter set.

For example, if the first report frame received by the initiator device indicates the third parameter set, the initiator device may determine the fourth parameter set based on the third parameter set. For example, the fourth narrowband PHY parameter included in the fourth parameter set is the same as the third narrowband PHY parameter included in the third parameter set.

It should be understood that, even if the response frame received by the initiator device indicates the second parameter set, the initiator device still determines the fourth parameter set based on the third parameter set. Compared with the response frame, the first report frame is a frame closer to the second range-measurement cycle. Therefore, compared with the second parameter set, the third parameter set suggested by the responder device based on the first report frame may be more applicable to the second range-measurement cycle. In other words, using the third parameter set is more conducive to improving ranging performance in the second range-measurement cycle. For example, if the responder device determines the third parameter set based on a channel condition, because the first report frame is closer to the second measurement measurement cycle, the channel condition based on which the responder device determines the third parameter set is closer to a channel condition of the second range-measurement cycle. Therefore, the third parameter set may be more applicable to transmitting the second range-measurement cycle. Therefore, when the initiator device determines the fourth parameter set based on the third parameter set, the initiator device can determine the fourth parameter set that is more applicable to the second range-measurement cycle.

For example, the initiator device determines the fourth parameter set based on a channel condition in fourth duration. Duration from an end moment of the fourth duration to a start moment at which the initiator device sends the second report frame does not exceed a fourth duration threshold. Alternatively, the initiator device determines the fourth parameter set based on a channel condition at a fourth moment, and duration from the fourth moment to the start moment at which the initiator device sends the second report frame does not exceed the fourth duration threshold. The channel condition is a channel condition between the initiator device and the responder device. For more descriptions of the fourth duration threshold, refer to the foregoing description of the first duration threshold in S610.

With reference to FIG. 10, the following describes a frame structure of a second report frame provided in an embodiment of this application.

As shown in FIG. 10, the second report frame provided in this embodiment of this application may include one or more of the following fields: a message ID field, occupying 1 octet and indicating an identifier of the first report frame, where, for example, if a value of the message ID field is 3, it represents that a frame including the message ID field is the second report frame; an address field, occupying 2 octets and indicating a target receive end (that is, a responder device) of the second report frame; a configuration parameter control field, occupying 1 octet; a timestamp field, occupying 4 octets; a ranging session configuration parameter field, occupying a variable number of octets; and a CRC field, occupying 2 octets. It should be understood that the configuration parameter control field or the ranging session configuration parameter field included in the second report frame may have another name. Names of the fields included in the second report frame are not limited in embodiments of this application. For a structure of the configuration parameter control field in the second report frame shown in FIG. 10, refer to the foregoing description of FIG. 7(c). For a structure of the ranging session configuration parameter field, refer to the foregoing description of FIG. 7(d). For more descriptions of other fields included in the second report frame, refer to an existing standard or protocol.

In another embodiment of this application, the method 600 further includes S651.

S651: The responder device sends an ACK frame of the second report frame to the initiator device.

Correspondingly, the initiator device receives the ACK frame of the second report frame from the responder device.

Specifically, after the responder device receives the second report frame, if the responder device determines to use the fourth parameter set in the second range-measurement cycle, the responder device sends the ACK frame of the second report frame to the initiator device.

In another embodiment of this application, the method 600 further includes S660.

S610: The initiator device sends a second poll frame to the responder device.

Correspondingly, the responder device receives the second poll frame from the initiator device.

Specifically, the initiator device sends the second poll frame to the responder device in the second range-measurement cycle. The second poll frame is for triggering ranging measurement in the second range-measurement cycle.

In another embodiment of this application, the second poll frame further indicates a fifth parameter set that takes effect in the second range-measurement cycle, and the fifth parameter set includes one or more of the following parameters: a fifth narrowband PHY parameter, a third narrowband channel allow list, a third ranging block structure parameter, or a fifth UWB MMS ranging configuration parameter. It should be noted that the fifth parameter set is in the second range-measurement cycle and takes effect after the initiator device sends the second poll frame. For more descriptions of the fifth parameter set, refer to the foregoing description of the first parameter set in S610. For a frame structure of the second poll frame, refer to the foregoing description in FIG. 7(a) to FIG. 7(d).

For example, if the response frame received by the initiator device indicates the second parameter set, and the initiator device fails to receive the first report frame, or the first report frame received by the initiator device does not indicate the third parameter set, the initiator device may determine the fifth parameter set based on the second parameter set. For example, the fifth narrowband PHY parameter included in the fifth parameter set is the same as the second narrowband PHY parameter included in the second parameter set.

For example, if the first report frame received by the initiator device indicates the third parameter set, the initiator device may determine the fifth parameter set based on the third parameter set. For example, the fifth narrowband PHY parameter included in the fifth parameter set is the same as the third narrowband PHY parameter included in the third parameter set.

It should be understood that, even if the response frame received by the initiator device indicates the second parameter set, the initiator device still determines the fifth parameter set based on the third parameter set. Compared with the response frame, the first report frame is a frame closer to the second range-measurement cycle. Therefore, compared with the second parameter set, the third parameter set suggested by the responder device based on the first report frame may be more applicable to the second range-measurement cycle. In other words, using the third parameter set is more conducive to improving ranging performance in the second range-measurement cycle. For example, if the responder device determines the third parameter set based on a channel condition, because the first report frame is closer to the second measurement measurement cycle, the channel condition based on which the responder device determines the third parameter set is closer to a channel condition of the second range-measurement cycle. Therefore, the third parameter set may be more applicable to the second range-measurement cycle. Therefore, when the initiator device determines the fifth parameter set based on the third parameter set, the initiator device can determine the fifth parameter set that is more applicable to the second range-measurement cycle.

For example, the initiator device determines the fifth parameter set based on a channel condition in fifth duration. Duration from an end moment of the fifth duration and a start moment at which the initiator device sends the second poll frame does not exceed a fifth duration threshold. Alternatively, the initiator device determines the fifth parameter set based on a channel condition at a fifth moment, and duration from the fifth moment to the start moment at which the initiator device sends the second poll frame does not exceed the fifth duration threshold. The channel condition is a channel condition between the initiator device and the responder device. For more descriptions of the fifth duration threshold, refer to the foregoing description of the first duration threshold in S610.

As described above, the response frame may indicate the second parameter set that is suggested for taking effect in the second range-measurement cycle, the first report frame may indicate a third parameter set that is suggested for taking effect in a third range-measurement cycle, the second report frame may indicate a fourth parameter set that takes effect in the second range-measurement cycle, and the second poll frame may indicate a fifth parameter set that takes effect in the second range-measurement cycle. When a plurality of frames indicate a parameter set that takes effect in the second range-measurement cycle, the parameter set that takes effect in the second range-measurement cycle may be a parameter set indicated by a frame closest to the second range-measurement cycle.

For example, if the response frame indicates the second parameter set that is suggested for taking effect in the second range-measurement cycle, and the initiator device sends the ACK frame of the response frame to the responder device, S630 and S640 are not performed in the method 600, the second poll frame does not indicate the fifth parameter set, and the parameter set that takes effect in the second range-measurement cycle is the second parameter set.

For another example, if the first report frame indicates the third parameter set that is suggested for taking effect in the second range-measurement cycle, and the initiator device sends the ACK frame of the first report frame to the responder device, S640 is not performed in the method 600, and the second poll frame does not indicate the fifth parameter set, the parameter set that takes effect in the second range-measurement cycle is the third parameter set.

For another example, if the second report frame indicates the fourth parameter set that takes effect in the second range-measurement cycle, when the second poll frame does not indicate the fifth parameter set, the parameter set that takes effect in the second range-measurement cycle is the fourth parameter set.

For another example, if the second poll frame indicates the fifth parameter set, the parameter set that takes effect in the second range-measurement cycle is the fifth parameter set.

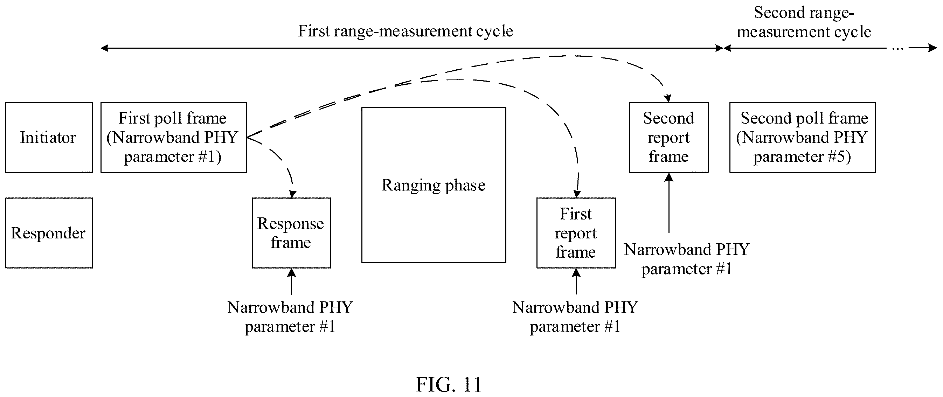

The following describes a time sequence relationship between a first poll frame, a response frame, a first report frame, a second report frame, and a second poll frame with reference to FIG. 11. It should be noted that, in FIG. 11, a narrowband PHY parameter shown in a solid-line box representing a frame indicates a narrowband PHY parameter indicated by the frame, and a narrowband PHY parameter that is outside the solid-line box and that points to a solid-line box by using an arrow indicates a narrowband PHY parameter for transmitting a frame represented by the solid-line box. For example, a narrowband PHY parameter #1 shown in a solid-line box representing the first poll frame is a narrowband PHY parameter indicated by the first poll frame, and a narrowband PHY parameter #1 that is outside a solid-line box representing the response frame and that points to the response frame by using an arrow indicates a narrowband PHY parameter for transmitting the response frame.

As shown in FIG. 11, an initiator device sends the first poll frame to a responder device in a first range-measurement cycle. If the first poll frame indicates the narrowband PHY parameter #1 (an example of a first narrowband PHY parameter), the responder device sends the response frame to the initiator device based on the narrowband PHY parameter #1. In a measurement report phase, the responder device may send the first report frame to the initiator device based on the narrowband PHY parameter #1, and the initiator device may send the second report frame to the responder device based on the narrowband PHY parameter #1. The initiator device may further send the second poll frame to the responder device in a second range-measurement cycle. If the second poll frame indicates a narrowband PHY parameter #5 (an example of a fifth narrowband PHY parameter), the responder device may send a response frame (not shown in the figure) of the second poll frame to the initiator device based on the narrowband PHY parameter #5, and the initiator device and the responder device may transmit a report frame (not shown in the figure) in a measurement report phase in the second range-measurement cycle based on the narrowband PHY parameter #5.

In this embodiment of this application, the initiator device may indicate, based on the first poll frame, a first parameter set that takes effect in the first range-measurement cycle. Compared with a conventional manner of setting a ranging session configuration parameter that takes effect in a plurality of range-measurement cycles, this embodiment helps set a ranging session configuration parameter more applicable to the first range-measurement cycle. For example, the initiator device may determine the first parameter set based on a channel condition. If a channel condition between the initiator device and the responder device is good, the initiator device may determine a more efficient first parameter set, thereby reducing occupied air interface time, improving ranging efficiency, and reducing interference to another network. Alternatively, if a channel condition between the initiator device and the responder device is poor, the initiator device may determine a first parameter set applicable to the poor channel condition, to ensure ranging measurement performance.

In addition, in the second range-measurement cycle after the first range-measurement cycle, the initiator device may further indicate, based on the second poll frame, a fifth parameter set that takes effect in the second range-measurement cycle, so that even in a scenario in which a channel condition frequently changes, a ranging session configuration parameter applicable to the second range-measurement cycle can be flexibly set according to this application.

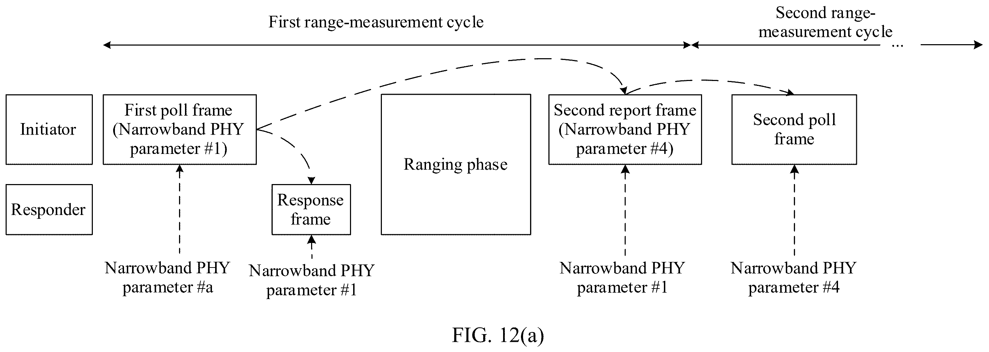

With reference to the method shown in FIG. 6, the foregoing describes a manner in which the initiator device and the responder device determine a narrowband PHY parameter for transmitting a response frame and/or a report frame (for example, the first report frame and the second report frame), but does not describe a manner in which the initiator device and the responder device determine the narrowband PHY parameter for transmitting a poll frame (for example, the first poll frame and the second poll frame). With reference to FIG. 12(a) to FIG. 14(c), the following describes, by using a manner in which an initiator device and a responder device determine a narrowband PHY parameter for transmitting a second poll frame, a manner in which the initiator device and the responder device determine a narrowband PHY parameter for transmitting a poll frame.

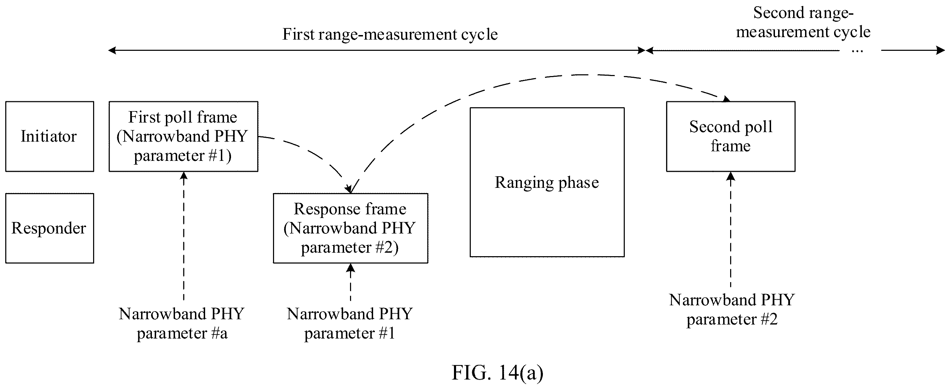

It should be noted that, in FIG. 12(a) to FIG. 14(c), a narrowband PHY parameter shown in a solid-line box representing a frame indicates a narrowband PHY parameter indicated by the frame, and a narrowband PHY parameter that is outside the solid-line box and that points to a solid-line box by using an arrow indicates a narrowband PHY parameter for transmitting a frame represented by the solid-line box. For example, in FIG. 12(a), a narrowband PHY parameter #1 shown in a solid-line box representing a first poll frame is a narrowband PHY parameter indicated by the first poll frame, and a narrowband PHY parameter #a that is outside the solid-line box representing the first poll frame and that points to the first poll frame by using an arrow indicates a narrowband PHY parameter for transmitting the first poll frame.

In a possible implementation, in the first range-measurement cycle, if the second report frame sent by the initiator device to the responder device indicates a fourth parameter set, and the fourth parameter set includes a fourth narrowband PHY parameter, in the second range-measurement cycle, the initiator device may send a second poll frame based on the fourth narrowband PHY parameter, and correspondingly, the responder device may receive the second poll frame based on the fourth narrowband PHY parameter.

In another embodiment of this application, when the initiator device receives an ACK frame of the second report frame from the responder device, the initiator device sends the second poll frame based on the fourth narrowband PHY parameter.

It should be understood that, if a standard or protocol specifies that the responder device needs to reply with the ACK frame of the second report frame, after receiving the ACK frame of the second report frame, the initiator device sends the second poll frame based on the fourth narrowband PHY parameter. If failing to receive the ACK frame of the second report frame, the initiator device sends the second poll frame based on the narrowband PHY parameter #a, a narrowband PHY parameter indicated by a frame closest to the second range-measurement cycle, or a narrowband PHY parameter indicated by a first frame closest to the second range-measurement cycle. A frame #1 is used as an example. If the initiator device sends an ACK frame of the frame #1 to the responder device, or the initiator device receives an ACK frame of the frame #1 from the responder device, the frame #1 may be referred to as a first frame.

If the standard or protocol does not specify that the responder device needs to reply with the ACK frame of the second report frame, when the second report frame indicates the fourth narrowband PHY parameter, the initiator device may send the second poll frame based on the fourth narrowband PHY parameter.

As shown in FIG. 12(a), the initiator device sends the first poll frame to the responder device in the first range-measurement cycle, where the first poll frame indicates the narrowband PHY parameter #1, and the responder device sends a response frame to the initiator device based on the narrowband PHY parameter #1. In a measurement report phase, the initiator device may send the second report frame to the responder device based on the narrowband PHY parameter #1, where the second report frame indicates a narrowband PHY parameter #4 (an example of a fourth narrowband PHY parameter). Further, in the second range-measurement cycle, the initiator device may send the second poll frame to the responder device based on the narrowband PHY parameter #4.

As shown in FIG. 12(a), the initiator device may send the first poll frame based on the narrowband PHY parameter #a. Optionally, if no frame received by the initiator device in a third range-measurement cycle indicates a narrowband PHY parameter that takes effect in the first range-measurement cycle, the initiator device sends the first poll frame based on the narrowband PHY parameter #a. The third range-measurement cycle is before the first range-measurement cycle. If the initiator device and the responder device do not engage in the initialization and negotiation phase before starting the ranging session, and an upper layer of the initiator device and the responder device does not set a narrowband PHY parameter, the narrowband PHY parameter #a is a default narrowband PHY parameter. Alternatively, if the initiator device and the responder device do not engage in the initialization and negotiation phase before starting the ranging session, and an upper layer of the initiator device and the responder device sets or updates a narrowband PHY parameter, the narrowband PHY parameter #a is a narrowband PHY parameter updated or set by the upper layer of the initiator device and the responder device. Alternatively, if the initiator device and the responder device negotiate a narrowband PHY parameter by engaging in the initialization and negotiation phase before starting the ranging session, the narrowband PHY parameter #a is the narrowband PHY parameter determined by the initiator device and the responder device through negotiation.

In another embodiment of this application, if the second report frame does not indicate the fourth narrowband PHY parameter, the initiator device sends the second poll frame based on the narrowband PHY parameter #a in the second range-measurement cycle. Alternatively, if the initiator device does not receive the ACK frame of the second report frame from the responder device, the initiator device may send the second poll frame based on the narrowband PHY parameter #a.

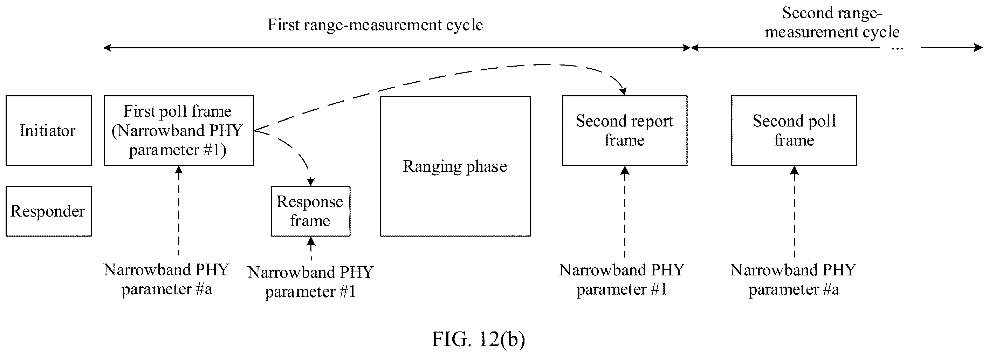

As shown in FIG. 12(b), if the second report frame sent by the initiator device does not indicate the narrowband PHY parameter #4, the initiator device sends the second poll frame based on the narrowband PHY parameter #a.

In another embodiment of this application, if the second report frame does not indicate the fourth narrowband PHY parameter, the response frame sent by the responder device does not indicate the second narrowband PHY parameter, and the responder device does not send the first report frame, or the first report frame sent by the responder device does not indicate the third narrowband PHY parameter, the initiator device sends the second poll frame based on the narrowband PHY parameter #a.

In a possible implementation, in the first range-measurement cycle, if the first report frame sent by the responder device to the initiator device indicates a third parameter set, and the third parameter set includes a third narrowband PHY parameter, in the second range-measurement cycle, the initiator device may send a second poll frame based on the third narrowband PHY parameter, and correspondingly, the responder device may receive the second poll frame based on the third narrowband PHY parameter.

In another embodiment of this application, when the initiator device sends an ACK frame of the first report frame to the responder device, the initiator device sends the second poll frame based on the third narrowband PHY parameter.

It should be understood that, if the standard or protocol specifies that the initiator device needs to reply with the ACK frame of the first report frame, after sending the ACK frame of the first report frame, the initiator device sends the second poll frame based on the third narrowband PHY parameter. If failing to send the ACK frame of the first report frame, the initiator device sends the second poll frame based on the narrowband PHY parameter #a, the narrowband PHY parameter indicated by the frame closest to the second range-measurement cycle, or the narrowband PHY parameter indicated by the first frame closest to the second range-measurement cycle.

If the standard or protocol does not specify that the initiator device needs to reply with the ACK frame of the first report frame, when the first report frame indicates the third narrowband PHY parameter, the initiator device may send the second poll frame based on the third narrowband PHY parameter.

In another embodiment of this application, if the initiator device does not send the second report frame, or the second report frame sent by the initiator device does not indicate the fourth narrowband PHY parameter, or the second report frame sent by the initiator device indicates the fourth narrowband PHY parameter, but the initiator device fails to receive the ACK frame of the second report frame from the responder device, the initiator device sends the second poll frame based on the third narrowband PHY parameter.

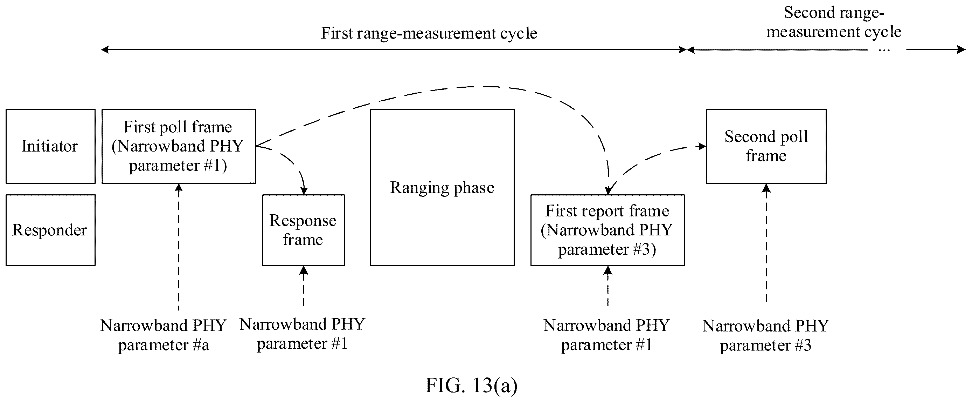

As shown in FIG. 13(a), an initiator device sends a first poll frame to a responder device in a first range-measurement cycle, where the first poll frame indicates a narrowband PHY parameter #1, and the responder device sends a response frame to the initiator device based on the narrowband PHY parameter #1. In a measurement report phase, the responder device may send a first report frame to the initiator device based on the narrowband PHY parameter #1, where the first report frame indicates a narrowband PHY parameter #3 (an example of a third narrowband PHY parameter). Further, in a second range-measurement cycle, the initiator device may send a second poll frame to the responder device based on the narrowband PHY parameter #3.

As shown in FIG. 13(a), the initiator device may send the first poll frame based on a narrowband PHY parameter #a. Optionally, if no frame received by the initiator device in a third range-measurement cycle indicates a narrowband PHY parameter that takes effect in the first range-measurement cycle, the initiator device sends the first poll frame based on the narrowband PHY parameter #a.

In another embodiment of this application, if the first report frame does not indicate the third narrowband PHY parameter, the initiator device sends the second poll frame based on the narrowband PHY parameter #a in the second range-measurement cycle. Alternatively, if the initiator device does not send an ACK frame of the first report frame to the responder device, the initiator device may send the second poll frame based on the narrowband PHY parameter #a.

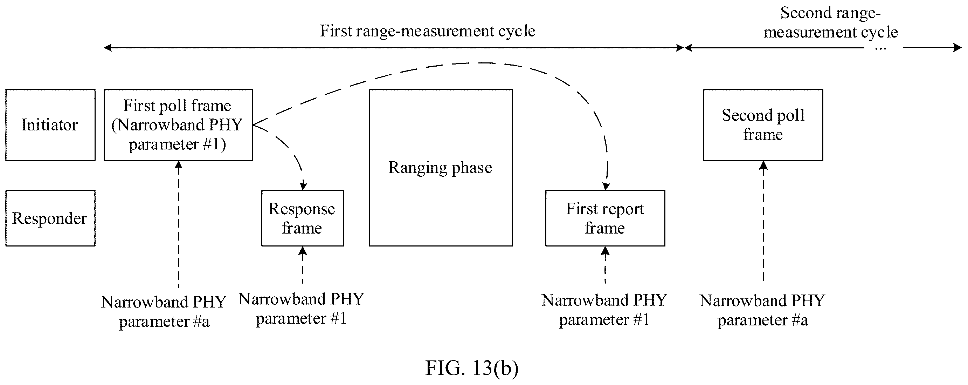

As shown in FIG. 13(b), if the first report frame sent by the initiator device does not indicate the narrowband PHY parameter #3, the initiator device sends the second poll frame based on the narrowband PHY parameter #a.

In another embodiment of this application, if the first report frame does not indicate the third narrowband PHY parameter, the response frame sent by the responder device does not indicate a second narrowband PHY parameter, and the initiator device does not send a second report frame, or the second report frame sent by the initiator device does not indicate a fourth narrowband PHY parameter, the initiator device sends the second poll frame based on the narrowband PHY parameter #a.

In a possible implementation, in the first range-measurement cycle, if the response frame sent by the responder device to the initiator device indicates a second parameter set, and the second parameter set includes the second narrowband PHY parameter, in the second range-measurement cycle, the initiator device may send the second poll frame based on the second narrowband PHY parameter, and correspondingly, the responder device may receive the second poll frame based on the second narrowband PHY parameter.

In another embodiment of this application, when the initiator device sends an ACK frame of the response frame to the responder device, the initiator device sends the second poll frame based on the second narrowband PHY parameter.

It should be understood that, if the standard or protocol specifies that the initiator device needs to reply with the ACK frame of the response frame, after sending the ACK frame of the response frame, the initiator device sends the second poll frame based on the second narrowband PHY parameter. If failing to send the ACK frame of the response frame, the initiator device sends the second poll frame based on the narrowband PHY parameter #a, the narrowband PHY parameter indicated by the frame closest to the second range-measurement cycle, or the narrowband PHY parameter indicated by the first frame closest to the second range-measurement cycle.

If the standard or protocol does not specify that the initiator device needs to reply with the ACK frame of the response frame, when the response frame indicates the second narrowband PHY parameter, the initiator device may send the second poll frame based on the second narrowband PHY parameter.

In another embodiment of this application, if the first range-measurement cycle does not include the measurement report phase; the first report frame sent by the responder device does not indicate the third narrowband PHY parameter; the first report frame sent by the responder device indicates the third narrowband PHY parameter, but the initiator device does not send the ACK frame of the first report frame to the responder device; the second report frame sent by the initiator device does not indicate the fourth narrowband PHY parameter; or the second report frame sent by the initiator device indicates the fourth narrowband PHY parameter, but the initiator device fails to receive the ACK frame of the second report frame from the responder device, the initiator device sends the second poll frame based on the second narrowband PHY parameter.

As shown in FIG. 14(a), an initiator device sends a first poll frame to a responder device in a first range-measurement cycle, where the first poll frame indicates a narrowband PHY parameter #1, and the responder device sends a response frame to the initiator device based on the narrowband PHY parameter #1. The response frame indicates a narrowband PHY parameter #2 (an example of a second narrowband PHY parameter). Further, in a second range-measurement cycle, the initiator device may send a second poll frame to the responder device based on the narrowband PHY parameter #2.

As shown in FIG. 14(a), the initiator device may send the first poll frame based on a narrowband PHY parameter #a. Optionally, if no frame received by the initiator device in a third range-measurement cycle indicates a narrowband PHY parameter that takes effect in the first range-measurement cycle, the initiator device sends the first poll frame based on the narrowband PHY parameter #a.

In another embodiment of this application, if the response frame does not indicate the second narrowband PHY parameter, the initiator device sends the second poll frame based on a first narrowband PHY parameter indicated by the first poll frame in the second range-measurement cycle. Alternatively, if the initiator device does not send an ACK frame of the response frame to the responder device, the initiator device may send the second poll frame based on the first narrowband PHY parameter.

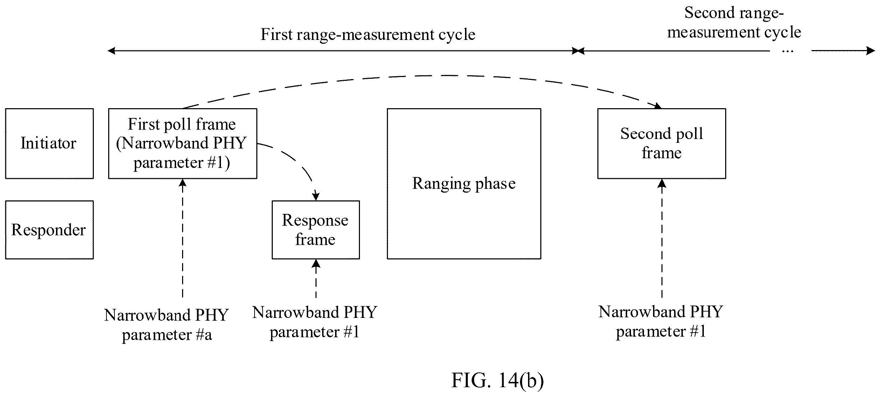

As shown in FIG. 14(b), if the response frame sent by the responder device does not indicate the narrowband PHY parameter #2, the initiator device sends the second poll frame based on the narrowband PHY parameter #1.

In another embodiment of this application, if the response frame does not indicate the second narrowband PHY parameter, and the first range-measurement cycle does not include the measurement report phase, the initiator device sends the second poll frame based on the first narrowband PHY parameter indicated by the first poll frame. Alternatively, if the response frame does not indicate the second narrowband PHY parameter, the first report frame sent by the responder device does not indicate the third narrowband PHY parameter, and the second report frame sent by the initiator device does not indicate the fourth narrowband PHY parameter, the initiator device sends the second poll frame based on the first narrowband PHY parameter indicated by the first poll frame.

In another embodiment of this application, if no frame (for example, the first poll frame and the response frame) transmitted in the first range-measurement cycle indicates a narrowband PHY parameter, the initiator device sends the second poll frame based on the narrowband PHY parameter #a.

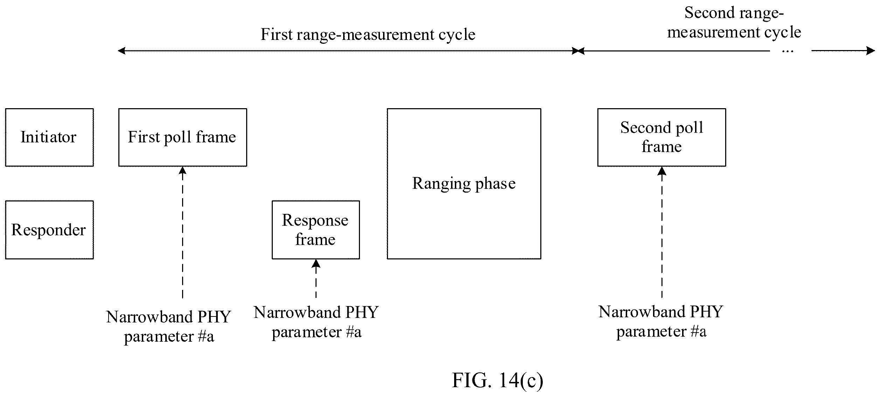

As shown in FIG. 14(c), if the first poll frame sent by the initiator device does not indicate the narrowband PHY parameter #1, and the response frame sent by the responder device does not indicate the narrowband PHY parameter #2, the initiator device sends the second poll frame based on the narrowband PHY parameter #a. As shown in FIG. 14(c), when the first poll frame does not indicate the narrowband PHY parameter #1, the responder device sends the response frame based on the narrowband PHY parameter #a.

Based on the foregoing descriptions in FIG. 12(a) to FIG. 14(c), the initiator device may send the second poll frame based on the narrowband PHY parameter indicated by the frame closest to the second range-measurement cycle. Alternatively, the initiator device may send the second poll frame based on the narrowband PHY parameter indicated by the first frame closest to the second range-measurement cycle.

Based on the foregoing manner of determining the narrowband PHY parameter for transmitting the poll frame, the initiator device may send the poll frame in the current range-measurement cycle based on the narrowband PHY parameter indicated by the frame closest to the current range-measurement cycle, thereby improving transmission performance of the poll frame. For example, the narrowband PHY parameter indicated by the frame closest to the current range-measurement cycle may be determined based on a channel condition. Therefore, the narrowband PHY parameter indicated by the frame closest to the current range-measurement cycle better meets a current channel condition, thereby helping improve transmission performance of the poll frame.

Alternatively, the initiator device may send the poll frame in the current range-measurement cycle based on a narrowband PHY parameter indicated by a first frame closest to the current range-measurement cycle, to ensure that the initiator device and the responder device use the same narrowband PHY parameter to transmit the poll frame, thereby avoiding a failure in sending the poll frame. For example, if the initiator device sends an ACK frame of the first frame to the responder device, the responder device may determine, based on the ACK frame of the first frame, that the initiator device transmits the poll frame based on the narrowband PHY parameter indicated by the first frame, and then the responder device may receive the poll frame based on the narrowband PHY parameter indicated by the first frame. Alternatively, if the initiator device receives the ACK frame of the first frame from the responder device, the initiator device may determine that the responder device receives the first frame, and determine that the responder device may receive the poll frame based on the narrowband PHY parameter indicated by the first frame, so that the initiator device sends the poll frame based on the narrowband PHY parameter indicated by the first frame, thereby avoiding a failure of the responder device to receive the poll frame.

It should be understood that, in the foregoing method embodiments, the method and the operation implemented by the device (for example, the initiator device and the responder device) may also be implemented by a component (for example, a chip or a circuit) of the device.

It may be further understood that, to implement the foregoing functions, the initiator device and the responder device include corresponding hardware structures and/or software modules for performing the functions.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

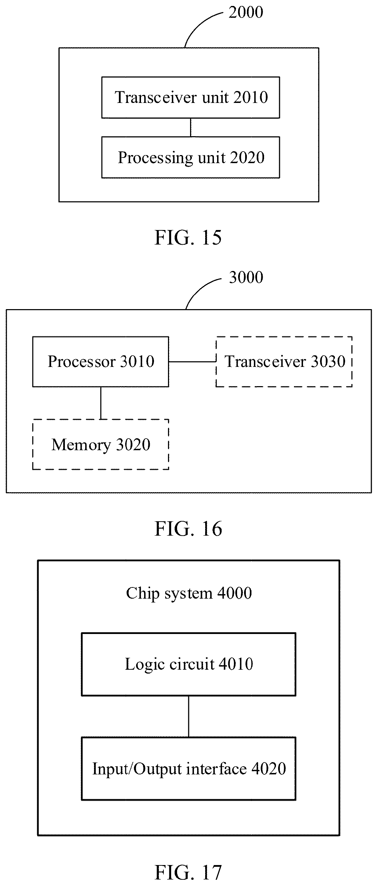

The following describes in detail apparatuses provided in embodiments of this application with reference to FIG. 15 to FIG. 17. It should be understood that descriptions of apparatus embodiments correspond to the descriptions of the method embodiments. Therefore, for content that is not described in detail, refer to the foregoing method embodiments. For brevity, some content is not described again.

In embodiments of this application, the initiator device or the responder device may be divided into functional modules based on the foregoing method embodiments. For example, the functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 15 is a block diagram of a communication apparatus according to an embodiment of this application. As shown in FIG. 15, the communication apparatus 2000 may include a transceiver unit 2010 and a processing unit 2020. The transceiver unit 2010 may communicate with the outside, and the processing unit 2020 is configured to process data. The transceiver unit 2010 may also be referred to as a communication interface or a communication unit.

Optionally, the communication apparatus 2000 may further include a storage unit. The storage unit may be configured to store instructions and/or data. The processing unit 2020 may read the instructions and/or the data in the storage unit, so that the communication apparatus implements the foregoing method embodiments.

In a first design, the communication apparatus 2000 may be the initiator device in the foregoing embodiments, or may be a component (for example, a chip) of the initiator device. The communication apparatus 2000 may implement steps or procedures performed by the initiator device in the foregoing method embodiments. The transceiver unit 2010 may be configured to perform a sending/receiving-related operation performed by the initiator device in the foregoing method embodiments. The processing unit 2020 may be configured to perform a processing-related operation performed by the initiator device in the foregoing method embodiments.

In a possible implementation, the transceiver unit 2010 is configured to send a first poll frame, where the first poll frame is for triggering ranging measurement in a first range-measurement cycle, the first poll frame further indicates a first parameter set that takes effect in the first range-measurement cycle, and the first parameter set includes one or more of the following parameters: a first narrowband PHY parameter, a first narrowband channel allow list, a first ranging block structure parameter, or a first UWB MMS ranging configuration parameter; and the transceiver unit 2010 is further configured to receive a response frame of the first poll frame.

In a second design, the communication apparatus 2000 may be the responder device in the foregoing embodiments, or may be a component (for example, a chip) of the responder device. The communication apparatus 2000 may implement steps or procedures performed by the responder device in the foregoing method embodiments. The transceiver unit 2010 may be configured to perform a sending/receiving-related operation performed by the responder device in the foregoing method embodiments. The processing unit 2020 may be configured to perform a processing-related operation performed by the responder device in the foregoing method embodiments.

In a possible implementation, the transceiver unit 2010 is configured to receive a first poll frame, where the first poll frame is for triggering ranging measurement in a first range-measurement cycle, the first poll frame further indicates a first parameter set that takes effect in the first range-measurement cycle, and the first parameter set includes one or more of the following parameters: a first narrowband PHY parameter, a first narrowband channel allow list, a first ranging block structure parameter, or a first UWB MMS ranging configuration parameter; and the transceiver unit 2010 is further configured to send a response frame of the first poll frame.

It should be understood that specific processes of performing the foregoing corresponding steps by the units are described in detail in the foregoing method embodiments. For brevity, details are not described herein again.

It should also be understood that the communication apparatus 2000 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the communication apparatus 2000 may be specifically the initiator device in the foregoing embodiments, and may be configured to perform the processes and/or the steps corresponding to the initiator device in the foregoing method embodiments; or the communication apparatus 2000 may be specifically the responder device in the foregoing embodiments, and may be configured to perform the processes and/or the steps corresponding to the responder device in the foregoing method embodiments. To avoid repetition, details are not described herein again. The transceiver unit 2010 may alternatively be a transceiver circuit (for example, may include a receiver circuit and a transmitter circuit), and the processing unit 2020 may be a processing circuit.

The communication apparatus 2000 in FIG. 15 may be a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

The communication apparatus 2000 in the foregoing solutions has a function of implementing corresponding steps performed by the initiator device or the responder device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform a receiving/sending operation and a related processing operation in the method embodiments.

FIG. 16 is a diagram of a communication apparatus 3000 according to an embodiment of this application. The communication apparatus 3000 includes a processor 3010. The processor 3010 is configured to execute a computer program or instructions stored in a memory 3020, or read data or signaling stored in the memory 3020, to perform the methods in the foregoing method embodiments. Optionally, there are one or more processors 3010.

Optionally, as shown in FIG. 16, the communication apparatus 3000 further includes the memory 3020, and the memory 3020 is configured to store a computer program or instructions and/or data. The memory 3020 may be integrated with the processor 3010, or may be disposed separately. Optionally, there are one or more memories 3020.

Optionally, as shown in FIG. 16, the communication apparatus 3000 further includes a transceiver 3030, and the transceiver 3030 is configured to receive and/or send a signal. For example, the processor 3010 is configured to control the transceiver 3030 to receive and/or send a signal.

In a solution, the communication apparatus 3000 is configured to implement the operations performed by the initiator device in the foregoing method embodiments.

For example, the processor 3010 is configured to execute the computer program or instructions stored in the memory 3020, to implement the operations related to the initiator device in the foregoing method embodiments, for example, the method performed by the initiator device in the embodiment shown in FIG. 6.

In another solution, the communication apparatus 3000 is configured to implement the operations performed by the responder device in the foregoing method embodiments.

For example, the processor 3010 is configured to execute the computer program or the instructions stored in the memory 3020, to implement related operations of the responder device in the foregoing method embodiments, for example, the method performed by the responder device in the embodiment shown in FIG. 6.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

FIG. 17 is a diagram of a chip system 4000 according to an embodiment of this application. The chip system 4000 (also referred to as a processing system) includes a logic circuit 4010 and an input/output interface (input/output interface) 4020.

The logic circuit 4010 may be a processing circuit in the chip system 4000. The logic circuit 4010 may be coupled and connected to a storage unit, and invoke instructions in the storage unit, so that the chip system 4000 can implement methods and functions in embodiments of this application. The input/output interface 4020 may be an input/output circuit in the chip system 4000, and output information processed by the chip system 4000, or input to-be-processed data or signaling information into the chip system 4000 for processing.

Specifically, for example, if the chip system 4000 is installed on an initiator device, the logic circuit 4010 is coupled to the input/output interface 4020, and the logic circuit 4010 may send a first poll frame through the input/output interface 4020, where the first poll frame may be generated by the logic circuit 4010. For another example, if the chip system 4000 is installed on a responder device, the logic circuit 4010 is coupled to the input/output interface 4020, the logic circuit 4010 may receive a first poll frame through the input/output interface 4020, and the logic circuit 4010 parses the first poll frame.

In a solution, the chip system 4000 is configured to implement the operations performed by the initiator device in the foregoing method embodiments.

For example, the logic circuit 4010 is configured to implement a processing-related operation performed by the initiator device in the foregoing method embodiments, for example, a processing-related operation performed by the initiator device in the embodiment shown in FIG. 6. The input/output interface 4020 is configured to implement a sending and/or receiving-related operation performed by the initiator device in the foregoing method embodiments, for example, the sending and/or receiving-related operation performed by the initiator device in the embodiment shown in FIG. 6.

In another solution, the chip system 4000 is configured to implement the operations performed by the responder device in the foregoing method embodiments.

For example, the logic circuit 4010 is configured to implement a processing-related operation performed by the responder device in the foregoing method embodiments, for example, a processing-related operation performed by the responder device in the embodiment shown in FIG. 6. The input/output interface 4020 is configured to implement a sending and/or receiving-related operation performed by the responder device in the foregoing method embodiments, for example, the sending and/or receiving-related operation performed by the responder device in the embodiment shown in FIG. 6.

An embodiment of this application further provides a computer-readable storage medium. The computer-readable storage medium stores computer instructions for implementing the methods performed by the devices in the foregoing method embodiments.

For example, when the computer program is executed by a computer, the computer is enabled to implement the method performed by the initiator device in the foregoing method embodiments.

For another example, when the computer program is executed by a computer, the computer is enabled to implement the method performed by the responder device in the foregoing method embodiments.

An embodiment of this application further provides a computer program product, including instructions. When the instructions are executed by a computer, a method performed by a device (for example, the initiator device, or for another example, the responder device) in the foregoing method embodiments is implemented.

An embodiment of this application further provides a communication system, including the foregoing initiator device and responder device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first poll frame, wherein the first poll frame is for triggering ranging measurement in a first range-measurement cycle, the first poll frame further indicates a first parameter set that takes effect in the first range-measurement cycle, and the first parameter set comprises one or more of the following parameters: a first narrowband physical layer PHY parameter, a first narrowband channel allow list, a first ranging block structure parameter, or a first ultra-wideband UWB multi-millisecond MMS ranging configuration parameter; and
receiving a response frame of the first poll frame.

2. The method according to claim 1, wherein the response frame indicates a second parameter set that is suggested for taking effect in a second range-measurement cycle, the second range-measurement cycle is after the first range-measurement cycle, and the second parameter set comprises one or more of the following parameters: a second narrowband PHY parameter or a second UWB MMS ranging configuration parameter.

3. The method according to claim 1 or 2, wherein the method further comprises:
receiving a first report frame, wherein the first report frame comprises a ranging measurement report corresponding to the first range-measurement cycle, the first report frame further indicates a third parameter set that is suggested for taking effect in the second range-measurement cycle, the second range-measurement cycle is after the first range-measurement cycle, and the third parameter set comprises one or more of the following parameters: a third narrowband PHY parameter or a third UWB MMS ranging configuration parameter.

4. The method according to claim 2 or 3, wherein the first poll frame is further for requesting a parameter set that is suggested for taking effect in the second range-measurement cycle.

5. The method according to any one of claims 1 to 4, wherein the first parameter set comprises the first ranging block structure parameter and/or the first UWB MMS ranging configuration parameter, and the method further comprises:
performing the ranging measurement in the first range-measurement cycle based on the first ranging block structure parameter and/or the first UWB MMS ranging configuration parameter.

6. The method according to any one of claims 1 to 5, wherein the first parameter set comprises the first narrowband PHY parameter, and the method further comprises:
sending a second report frame based on the first narrowband PHY parameter, wherein the second report frame comprises a ranging measurement report corresponding to the first range-measurement cycle.

7. The method according to any one of claims 1 to 6, wherein the first parameter set comprises the first narrowband channel allow list, and the method further comprises:
sending the second report frame on a first narrowband channel comprised in the first narrowband channel allow list, wherein the second report frame comprises the ranging measurement report corresponding to the first range-measurement cycle.

8. The method according to claim 6 or 7, wherein the second report frame further indicates a fourth parameter set that takes effect in the second range-measurement cycle, the second range-measurement cycle is after the first range-measurement cycle, and the fourth parameter set comprises one or more of the following parameters: a fourth narrowband PHY parameter, a second narrowband channel allow list, a second ranging block structure parameter, or a fourth UWB MMS ranging configuration parameter.

9. The method according to claim 8, wherein the fourth parameter set comprises the fourth narrowband PHY parameter, and the method further comprises:
sending a second poll frame based on the fourth narrowband PHY parameter, wherein the second poll frame is for triggering ranging measurement in the second range-measurement cycle.

10. The method according to claim 1, wherein the first parameter set comprises the first narrowband PHY parameter, and the method further comprises:
sending a second poll frame based on the first narrowband PHY parameter, wherein the second poll frame is for triggering ranging measurement in a second range-measurement cycle, and the second range-measurement cycle is after the first range-measurement cycle.

11. The method according to claim 2, wherein the second parameter set comprises the second narrowband PHY parameter, and the method further comprises:
sending a second poll frame based on the second narrowband PHY parameter, wherein the second poll frame is for triggering ranging measurement in the second range-measurement cycle, and the second range-measurement cycle is after the first range-measurement cycle.

12. The method according to claim 3, wherein the third parameter set comprises the third narrowband PHY parameter, and the method further comprises:
sending a second poll frame based on the third narrowband PHY parameter, wherein the second poll frame is for triggering ranging measurement in the second range-measurement cycle, and the second range-measurement cycle is after the first range-measurement cycle.

13. A communication method, comprising:
receiving a first poll frame, wherein the first poll frame is for triggering ranging measurement in a first range-measurement cycle, the first poll frame further indicates a first parameter set that takes effect in the first range-measurement cycle, and the first parameter set comprises one or more of the following parameters: a first narrowband physical layer PHY parameter, a first narrowband channel allow list, a first ranging block structure parameter, or a first ultra-wideband UWB multi-millisecond MMS ranging configuration parameter; and
sending a response frame of the first poll frame.

14. The method according to claim 13, wherein the first parameter set comprises the first narrowband PHY parameter, and the sending a response frame of the first poll frame comprises:
sending the response frame based on the first narrowband PHY parameter.

15. The method according to claim 13 or 14, wherein the first parameter set comprises the first narrowband channel allow list, and the sending a response frame of the first poll frame comprises:
sending the response frame on a second narrowband channel comprised in the first narrowband channel allow list.

16. The method according to any one of claims 13 to 15, wherein the response frame indicates a second parameter set that is suggested for taking effect in a second range-measurement cycle, the second range-measurement cycle is after the first range-measurement cycle, and the second parameter set comprises one or more of the following parameters: a second narrowband PHY parameter or a second UWB MMS ranging configuration parameter.

17. The method according to any one of claims 13 to 16, wherein the method further comprises:
sending a first report frame, wherein the first report frame comprises a ranging measurement report corresponding to the first range-measurement cycle, the first report frame further indicates a third parameter set that is suggested for taking effect in the second range-measurement cycle, the second range-measurement cycle is after the first range-measurement cycle, and the third parameter set comprises one or more of the following parameters: a third narrowband PHY parameter or a third UWB MMS ranging configuration parameter.

18. The method according to claim 17, wherein the first parameter set comprises the first narrowband PHY parameter, and the sending a first report frame comprises:
sending the first report frame based on the first narrowband PHY parameter.

19. The method according to claim 17 or 18, wherein the first parameter set comprises the first narrowband channel allow list, and the sending a first report frame comprises:
sending the first report frame on a third narrowband channel comprised in the first narrowband channel allow list.

20. The method according to any one of claims 16 to 19, wherein the first poll frame is further for requesting a parameter set that is suggested for taking effect in the second range-measurement cycle.

21. The method according to any one of claims 13 to 20, wherein the first parameter set comprises the first ranging block structure parameter and/or the first UWB MMS ranging configuration parameter, and the method further comprises:
performing the ranging measurement in the first range-measurement cycle based on the first ranging block structure parameter and/or the first UWB MMS ranging configuration parameter.

22. A communication apparatus, wherein the communication apparatus comprises a unit configured to perform the method according to any one of claims 1 to 12, or comprises a unit configured to perform the method according to any one of claims 13 to 21.

23. A communication apparatus, comprising: a processor, configured to execute computer instructions stored in a memory, to enable the communication apparatus to perform the method according to any one of claims 1 to 12, or to enable the communication apparatus to perform the method according to any one of claims 13 to 21.

24. The communication apparatus according to claim 23, wherein the communication apparatus further comprises the memory.

25. The communication apparatus according to claim 23 or 24, wherein the communication apparatus further comprises a communication interface, and the communication interface is coupled to the processor; and
the communication interface is configured to input and/or output information.

26. A computer-readable storage medium, configured to store a computer program, wherein the computer program comprises instructions for implementing the method according to any one of claims 1 to 12, or comprises instructions for implementing the method according to any one of claims 13 to 21.

27. A chip system, comprising a communication interface and a processor, wherein
the communication interface is configured to input and/or output signaling or data; and
the processor is configured to execute a computer-executable program, so that a device on which the chip system is installed performs the method according to any one of claims 1 to 12, or performs the method according to any one of claims 13 to 21.
